(19) **Europäisches Patentamt / European Patent Office / Office européen des brevets**

(11) **EP 4 773 195 A1**

(12) **EUROPEAN PATENT APPLICATION**
published in accordance with Art. 153(4) EPC

(43) Date of publication:
08.07.2026 Bulletin 2026/28

(21) Application number: 24859846.8

(22) Date of filing: 28.08.2024

(51) International Patent Classification (IPC):
H01M 4/13 (2010.01)    H01M 4/139 (2010.01)
H01M 4/36 (2006.01)    H01M 4/62 (2006.01)
H01M 4/66 (2006.01)    H01M 10/052 (2010.01)
H01M 10/0566 (2010.01)

(52) Cooperative Patent Classification (CPC):
H01M 4/13; H01M 4/139; H01M 4/36; H01M 4/62;
H01M 4/66; H01M 10/052; H01M 10/0566;
Y02E 60/10

(86) International application number:
PCT/JP2024/030775

(87) International publication number:
WO 2025/047816 (06.03.2025 Gazette 2025/10)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 29.08.2023 JP 2023138712

(71) Applicant: **Zeon Corporation**
**Tokyo 100-8246 (JP)**

(72) Inventors:
• **ISSHIKI, Yasuhiro**
**Tokyo 100-8246 (JP)**
• **FUJII, Tsutomu**
**Tokyo 100-8246 (JP)**

(74) Representative: **Maiwald GmbH**
**Elisenhof**
**Elisenstraße 3**
**80335 München (DE)**

(54) **NONAQUEOUS SECONDARY BATTERY ELECTRODE, METHOD FOR MANUFACTURING SAME, AND NONAQUEOUS SECONDARY BATTERY**

(57) An electrode for a non-aqueous secondary battery, comprising a current collector layer, an electroconductive adhesion layer, and an electrode mixture layer in this order, wherein:
the electrode mixture layer contains an electrode active material and a binder;
the electroconductive adhesion layer includes a first adhesion layer that is disposed on the current collector layer and a second adhesion layer that is disposed so as to partially cover the first adhesion layer and is in contact with the electrode mixture layer;
the first adhesion layer contains electroconductive particles and a binder; and
the second adhesion layer contains electroconductive particles and a binder and has a containing ratio of the electroconductive particles lower than that in the first adhesion layer or the second adhesion layer contains a binder and no electroconductive particles. A method for manufacturing the electrode for a non-aqueous secondary battery and a non-aqueous secondary battery are also provided.

FIG.1

# EP 4 773 195 A1

## Description

Technical Field

The present invention relates to an electrode for a non-aqueous secondary battery and a method for producing the same, and a non-aqueous secondary battery.

Background Art

A non-aqueous secondary battery, such as a non-aqueous lithium ion secondary battery, usually includes electrodes including a positive electrode and a negative electrode. Further, an electrode for a non-aqueous secondary battery usually includes a current collector, and an electrode mixture layer that is disposed on the surface of the current collector and that contains an electrode active material. Such an electrode is generally formed by a method in which a slurry containing a solvent and materials that constitutes the electrode mixture layer is prepared and applied onto the surface of the current collector to form a layer of the slurry, and this layer is dried.

However, in recent years, production methods of electrodes by a dry process using powdery materials have attracted attention (Patent Literatures 1 to 4).

Citation List

Patent Literature

Patent Literature 1: Japanese Patent Application Laid-Open No. 2010-108971 A
Patent Literature 2: Japanese Patent Application Laid-Open No. 2014-078497 A (corresponding publication: specification of U.S. patent application publication No. 2014/079872 and specification of U.S. patent application publication No. 2015/0194680)
Patent Literature 3: Japanese Patent Application Laid-Open No. 2013-012393 A (corresponding publication: specification of U.S. patent application publication No. 2013/0004843)
Patent Literature 4: International Publication No. 2015/115177

Summary of The Invention

Technical Problem

For example, the method for producing an electrode by a dry process may produce an electrode mixture layer by accumulating, on a current collector, composite particles containing an electrode active material and a binder and performing press molding. However, the adhesion of the composite particles to the current collector is low, and hence an electrode produced by the dry process may tend to have high resistance. Furthermore, the composite particles accumulated on the current collector freely move on the current collector during press molding, and thus it becomes necessary to restrict the molding speed, for example, to mold an electrode mixture layer having a desired thickness by roll press molding. Because of this restriction, it is difficult to improve productivity.

For example, Patent Literature 1 discloses that an electroconductive adhesion layer containing carbon particles is disposed between a current collector and an electrode mixture layer. This technique can reduce the resistance of the resulting electrode, but has difficulty in sufficiently enhancing the adhesion of the composite particles to the current collector and increasing the molding speed during roll press molding. In addition, for example, Patent Literature 2 discloses that application of a binder in a pattern between the current collector and the electrode mixture layer improves the adhesion of the composite particles to the current collector. This technique can increase the molding speed during roll press molding, but tends to increase the resistance between the current collector and the electrode active material.

Accordingly, when conventionally known techniques are used, it has also been difficult to achieve both high-speed moldability and a reduction in the resistance of the electrode.

The present invention has been made in view of the circumstances described above, and an object of the present invention is to provide an electrode for a non-aqueous secondary battery that has low resistance and can be produced by increasing the press molding speed during molding of the electrode, that is, exhibiting satisfactory high-speed moldability, and also to provide a method for producing an electrode for a non-aqueous secondary battery that method can produce low resistance electrodes while increasing the molding speed, as well as a non-aqueous secondary battery including the electrode for a non-aqueous secondary battery.

Solution to Problem

The present invention is the following.

<1> An electrode for a non-aqueous secondary battery, comprising a current collector layer, an electroconductive adhesion layer, and an electrode mixture layer in this order, wherein:

the electrode mixture layer contains an electrode active material and a binder;
the electroconductive adhesion layer includes a first adhesion layer that is disposed on the current collector layer and a second adhesion layer that is disposed so as to partially cover the first adhesion layer and is in contact with the electrode mixture layer;
the first adhesion layer contains electroconductive particles and a binder; and
the second adhesion layer contains electroconductive particles and a binder and has a containing ratio of the electroconductive particles lower than that in the first adhesion layer or
the second adhesion layer contains a binder and no electroconductive particles.

<2> The electrode for a non-aqueous secondary battery according to <1>, wherein the electrode mixture layer includes composite particles containing an electrode active material and a binder.
<3> The electrode for a non-aqueous secondary battery according to <1> or <2>, wherein the second adhesion layer contains a binder and no electroconductive particles.
<4> The electrode for a non-aqueous secondary battery according any one of <1> to <3>, wherein the second adhesion layer is regularly disposed at an area that is part of a surface of the first adhesion layer.
<5> The electrode for a non-aqueous secondary battery according any one of <1> to <4>, wherein the second adhesion layer is partially disposed on a surface of the current collector layer on a side where the first adhesion layer is disposed.
<6> The electrode for a non-aqueous secondary battery according any one of <1> to <5>, wherein a ratio of an area of the first adhesion layer covered with the second adhesion layer relative to a total area of the first adhesion layer is 20% or more and 80% or less.
<7> The electrode for a non-aqueous secondary battery according any one of <1> to <6>, wherein a thickness t1 of the first adhesion layer is 0.1 μm or more and 3.0 μm or less.
<8> The electrode for a non-aqueous secondary battery according any one of <1> to <7>, wherein a thickness t2 of the second adhesion layer is 0.1 μm or more and 2.0 μm or less.
<9> The electrode for a non-aqueous secondary battery according any one of <1> to <8>, wherein a ratio (t2/t1) of a thickness t2 of the second adhesion layer relative to a thickness t1 of the first adhesion layer is 0.1 or more and 10 or less.
<10> The electrode for a non-aqueous secondary battery according any one of <1> to <9>, wherein the binder contained in the second adhesion layer is in a particulate shape, and a median diameter of the binder is 0.1 μm or more and 1 μm or less.
<11> The electrode for a non-aqueous secondary battery according any one of <1> to <10>, wherein a glass transition temperature Tg1 of the binder contained in the first adhesion layer is -30°C or higher and 25°C or lower, a glass transition temperature Tg2 of the binder contained in the second adhesion layer is -50°C or higher and -10°C or lower, and the Tg1 is greater than the Tg2.
<12> The electrode for a non-aqueous secondary battery according to any one of <1> to <11>, wherein a tackiness of a surface of the electroconductive adhesion layer is more than 0.1 N and 3.0 N or less.
<13> A non-aqueous secondary battery comprising a positive electrode, a negative electrode, and an electrolytic solution, wherein
at least one of the positive electrode and the negative electrode is the electrode for a non-aqueous secondary battery according any one of <1> to <12>.
<14> A method for producing the electrode for a non-aqueous secondary battery according any one of <1> to <12>, the method comprising:

a step (A) of disposing an electroconductive adhesion layer on the current collector layer by performing a step (A1) of disposing the first adhesion layer on the current collector layer, and a step (A2) of partially disposing the second adhesion layer on the first adhesion layer; and
a step (B) of disposing an electrode mixture layer on the second adhesion layer of the electroconductive adhesion layer by supplying composite particles containing the electrode active material and the binder thereonto and pressing the composite particles.

<15> The method for producing the electrode for a non-aqueous secondary battery according to <14>, wherein:

the current collector layer is long-length; and
a width S1 of a region where the first adhesion layer is provided on the current collector layer and a width S2 of a region where the second adhesion layer is provided satisfy a relationship expressed by the following formula (1):

$$100 \leq S2/S1 \times 100 \leq 110 \quad (1).$$

Advantageous Effects of Invention

The present invention can provide an electrode for a non-aqueous secondary battery having low resistance and exhibiting satisfactory high-speed moldability, a method for producing an electrode for a non-aqueous secondary battery that method can produce low resistance electrodes while increasing the molding speed, and a non-aqueous secondary battery including the electrode for a non-aqueous secondary battery.

Brief Description of Drawings

FIG. 1 is a cross-sectional view schematically illustrating an electrode according to an embodiment of the present invention.
FIG. 2 is a cross-sectional view schematically illustrating an electroconductive adhesion layer according to an embodiment of the present invention.
FIG. 3 is a plan view schematically illustrating the electroconductive adhesion layer according to the embodiment of the present invention.

Description of Embodiments

Hereinafter, the present invention will be described in detail with reference to embodiments and examples. However, the present invention is not limited to the embodiments and examples described hereinafter, and may be freely modified for implementation without departing from the scope of claims of the present invention and the scope of their equivalents.
In the following description, the proportion of a monomer unit formed by polymerization of a monomer in a polymer produced by copolymerization of a plurality of types of monomers usually coincides with the ratio (charge ratio) of the monomer relative to all the monomers used in polymerization of the polymer unless otherwise specified.
Further, in the following description, a molecule or a structure of part of the molecule, such as a monomer unit, is not restricted by the method for producing the molecule or the structure. For example, an aromatic vinyl monomer unit is a unit having a structure formed by polymerization of an aromatic vinyl monomer. However, the aromatic vinyl monomer unit also encompasses a unit that has the same structure as the structure formed by polymerization of an aromatic vinyl monomer and is formed by a formation method other than the polymerization.

[1. Summary of electrode for non-aqueous secondary battery]

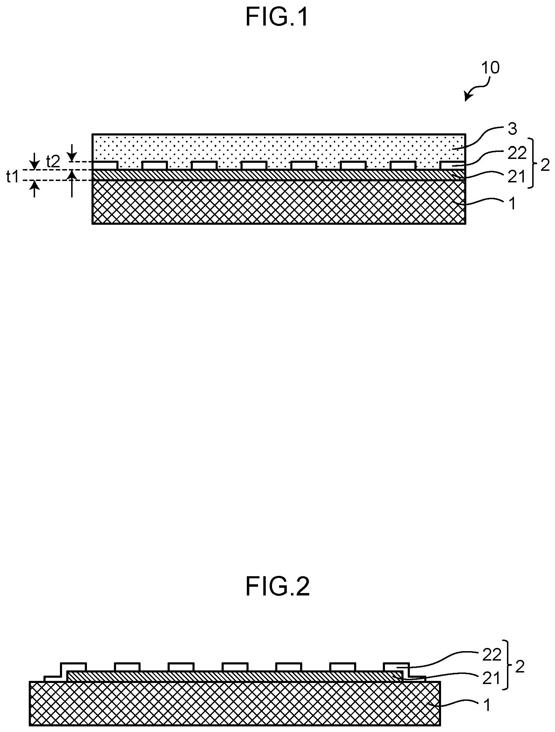

FIG. 1 is a cross-sectional view schematically illustrating an electrode for a non-aqueous secondary battery according to an embodiment of the present invention. In the following description, the electrode for a non-aqueous secondary battery may simply be referred to as "electrode". An electrode 10 according to an embodiment of the present invention includes, as shown in FIG. 1, a current collector layer 1, an electroconductive adhesion layer 2, and an electrode mixture layer 3 in this order. In the electrode 10, the electrode mixture layer 3 is a layer containing an electrode active material and a binder.
Further, in the electrode 10 as shown in FIG. 1, the electroconductive adhesion layer 2 includes a first adhesion layer 21, which is disposed on the current collector layer 1, and a second adhesion layer 22, which is disposed so as to partially cover the first adhesion layer 21 and is in contact with the electrode mixture layer 3. The first adhesion layer 21 is a layer containing electroconductive particles and a binder. Furthermore, the second adhesion layer 22 is either a layer having the following configuration (a) or a layer having the following configuration (b).

(a) A layer that contains electroconductive particles and a binder and in which the containing ratio of the electro-conductive particles is lower than that in the first adhesion layer 21.

(b) A layer that contains a binder and no electroconductive particles.

When the electroconductive adhesion layer 2 is, as the second adhesion layer, either a layer having the configuration (a) or a layer having the configuration (b), the containing ratio of the binder in the second adhesion layer is usually higher than the containing ratio of the binder in the first adhesion layer.

According to the present invention, when an electrode includes the electroconductive adhesion layer having the first adhesion layer and the second adhesion layer, the electrode can have reduced resistance and satisfactory high-speed moldability.

The present inventor presumes that the mechanism capable of achieving both high-speed moldability and a reduction in electrode resistance in an electrode according to an embodiment of the present invention is as described below. However, the technical scope of the present invention is not restricted by the mechanism described below.

In general, an electrode including an electrode mixture layer that is disposed by pressing composite particles containing an electrode active material and a binder by a dry process tends to have high contact resistance between a current collector layer and the electrode active material in the electrode mixture layer. On the other hand, the electrode according to the present embodiment has a structure in which the current collector layer and the electrode mixture layer are layered via the first adhesion layer containing the electroconductive particles at an area where the second adhesion layer is not provided in the electroconductive adhesion layer. In the layered structure described above, the contact resistance between the electrode active material in the electrode mixture layer and the first adhesion layer can be sufficiently reduced, and thus the contact resistance between the first adhesion layer and the current collector layer can also be sufficiently reduced. As a result, the interposition of the first adhesion layer can sufficiently reduce the resistance between the current collector layer and the electrode active material in the electrode mixture layer at an area where the second adhesion layer is not provided in the electrode according to the embodiment. Accordingly, the present inventor presumes that the resistance of the entire electrode can be reduced even when the second adhesion layer is partially disposed.

Further, the second adhesion layer in which the containing ratio of the binder is relatively higher than that in the first adhesion layer is partially disposed on the first adhesion layer in the electrode according to the embodiment, and hence the friction coefficient of the surface of the electroconductive adhesion layer can be sufficiently increased. Accordingly, the present inventor presumes that in a case where the composite particles are supplied to the surface of the electroconductive adhesion layer and pressed, even when the movement of the composite particles is restricted to increase the press molding speed (molding speed), an electrode mixture layer having a desired thickness can be molded.

Furthermore, the present inventor has examined the electrode according to the embodiment, and unexpectedly found that the electrode according to the present embodiment exhibits an effect that can improve the high-temperature storage stability of a non-aqueous secondary battery. The present inventor presumes that this mechanism is as described below. However, the technical scope of the present invention is not restricted by the mechanism described below.

Although the electroconductive particles are made of a substance that can exhibit a function of reducing the resistance between the current collector layer and the electrode active material, the electroconductive particles are presumed to cause deterioration of a non-aqueous secondary battery (e.g., alteration of an electrode active material at a high temperature or an origin of deterioration of an electrolytic solution). Meanwhile, in the present embodiment, part of the binder in the second adhesion layer disposed on the first adhesion layer permeates the first adhesion layer and covers part of the surface of the electroconductive particles. As a result, in the electroconductive adhesion layer, the surface of the electroconductive particles can be covered with the binder to such an extent that deterioration of a non-aqueous secondary battery may be suppressed while satisfactory electroconductivity is maintained between the current collector layer and the electrode active material in the electrode mixture layer. Accordingly, the present inventor presumes that the high-temperature storage stability of a non-aqueous secondary battery can be improved.

Hereinafter, each configuration of the electrode according to the present embodiment will be described.

[2. Current collector layer]

A material for the current collector layer is preferably a material having electroconductivity and electrochemical durability. Specific examples of the material usable for the current collector layer may include a metal, carbon, and an electroconductive macromolecule, and a metal is preferable. Examples of the metal may include copper, aluminum, platinum, nickel, tantalum, titanium, stainless steel, and alloys thereof. Among these, from the viewpoint of electroconductivity and voltage resistance, copper, aluminum, and an aluminum alloy are preferable. When high voltage resistance is required, high-purity aluminum disclosed in Japanese Patent Application Laid-Open No. 2001-176757 A can be preferably used. In particular, aluminum is preferably used as the material for the current collector layer usable in a positive electrode, and copper is preferably used as the material for the current collector layer usable in a negative electrode. As the material, one type thereof may be solely used, and two or more types thereof may also be used in combination.

The current collector layer generally has a film shape or a sheet shape. The thickness of the current collector layer may be appropriately selected depending on the purposes of use, and is preferably 1 $\mu$m or more, more preferably 5 $\mu$m or more, and still more preferably 10 $\mu$m or more, and is preferably 200 $\mu$m or less, more preferably 100 $\mu$m or less, and still more preferably 50 $\mu$m or less.

[3. Electroconductive adhesion layer]

The electroconductive adhesion layer has the first adhesion layer that is disposed on the current collector layer, and the second adhesion layer that is disposed so as to partially cover the first adhesion layer and is in contact with the electrode mixture layer.

[3.1. First adhesion layer]

The first adhesion layer is a layer that is disposed on the current collector layer, and that contains at least the electroconductive particles and the binder.

The electroconductive particles that may be contained in the first adhesion layer are particles composed of an electroconductive material. Examples of the electroconductive particles may include metal particles and carbon particles. Among these, the electroconductive particles are preferably carbon particles because the resistance between the current collector layer and the electrode active material can be effectively reduced. Further, when the first adhesion layer contains carbon particles, the high-temperature storage stability of a non-aqueous secondary battery tends to easily be reduced, and thus a non-aqueous secondary battery having satisfactory high-temperature storage stability can be obtained even when carbon particles are contained.

Examples of carbon particles may include: graphite having high electroconductivity due to the presence of delocalized $\pi$ electrons (specifically, natural graphite and artificial graphite); carbon black that is a spherical aggregate having a turbostratic structure formed by assembling some layers of graphitic carbon microcrystal (specifically, acetylene black, ketjen black, other furnace black, channel black, and thermal lamp black); carbon fibers, and carbon whisker. Among these, graphite or carbon black is particularly preferable because the carbon particles of the first adhesion layer are packed at a high density, electron transfer resistance can be reduced, and the internal resistance of a non-aqueous secondary battery can be reduced. As the exemplified carbon particles, one type thereof may be solely used, and two or more types thereof may also be used in combination.

The median diameter of the electroconductive particles is, for example, 0.1 $\mu$m or more, preferably 0.2 $\mu$m or more, and more preferably 0.3 $\mu$m or more, and is, for example, 10 $\mu$m or less, preferably 8 $\mu$m or less, and more preferably 6 $\mu$m or less. The median diameter of the electroconductive particles may be determined as a particle diameter (D50) at which the cumulative volume calculated from the small-diameter side in a particle size distribution (on a volume basis) obtained by measurement of the particle diameter of the particles with a laser diffraction type particle size distribution measurement device (SALD-3100; manufactured by Shimadzu Corporation) becomes 50%.

The containing ratio of the electroconductive particles in the first adhesion layer is, for example, usually 40 % by mass or more, preferably 50% by mass or more, and more preferably 60% by mass or more, and is usually 99.9% by mass or less, preferably 90% by mass or less, and more preferably 80% by mass or less, relative to the solid content contained in the first adhesion layer.

The binder that the first adhesion layer may contain is a compound that can bind the electroconductive particles to each other and can also bind the electroconductive particles to the current collector layer. Such the binder is usually a polymer. The polymer as the binder may be a water-insoluble polymer. Unless otherwise specified, the term "water-insoluble" of a polymer means that when 0.5 g of the polymer is dissolved in 100 g of water at 25°C, the insoluble content is 90% by mass or more. Preferable examples of the binder may include polymers such as an acrylate-based polymer, a conjugated diene-based polymer, and a fluorine-based polymer. Among these, an acrylate-based polymer and a conjugated diene-based polymer are preferable. This is because the withstand voltage can be increased and the energy density of the non-aqueous secondary battery can be increased as well as because the binder has excellent binding force.

The acrylate-based polymer is a polymer containing a monomer unit (hereinafter referred to as "acrylate monomer unit" in some cases) having a structure formed by polymerizing a monomer [(meth)acrylic acid ester] represented by the general formula (1): $CH_2=CR^1\text{-}COOR^2$ (in the formula, $R^1$ represents a hydrogen atom or a methyl group, and $R^2$ represents an alkyl group or a cycloalkyl group. $R^2$ may further have an ether group, a hydroxyl group, a phosphate group, an amino group, a carboxyl group, a fluorine atom, or an epoxy group.). Specifically, the acrylate-based polymer may be a homopolymer of the monomer represented by the general formula (1) or a copolymer obtained by polymerizing a monomer mixture containing the monomer represented by the general formula (1). Specific examples of the monomer compound represented by the general formula (1) may include a (meth)acrylic acid alkyl ester, such as methyl (meth)acrylate, ethyl (meth)acrylate, propyl (meth)acrylate, isopropyl (meth)acrylate, n-butyl (meth)acrylate, isobutyl (meth)acrylate, t-butyl (meth)acrylate, cyclohexyl (meth)acrylate, 2-ethylhexyl (meth)acrylate, n-pentyl (meth) acrylate, isopentyl (meth)acrylate, n-hexyl (meth)acrylate, 2-ethylhexyl (meth)acrylate, hexyl (meth)acrylate, nonyl (meth)acrylate, octyl (meth)acrylate, isooctyl (meth)acrylate, isobornyl (meth)acrylate, isodecyl (meth)acrylate, lauryl (meth)acrylate, stearyl (meth)acrylate, and tridecyl (meth)acrylate; an ether group-containing (meth)acrylic acid ester, such as butoxyethyl (meth)acrylate, ethoxydiethylene glycol (meth)acrylate, methoxydipropylene glycol (meth)acrylate, methoxypolyethylene glycol (meth)acrylate, phenoxyethyl (meth)acrylate, and tetrahydrofurfuryl (meth)acrylate; a hydroxyl group-containing (meth)acrylic acid ester, such as 2-hydroxyethyl (meth)acrylate, 2-hydroxypropyl (meth)acrylate, 2-hydroxy-3-phenoxypropyl (meth)acrylate, and 2-(meth)acryloyloxyethyl-2-hydroxyethyl phthalate; a carboxylic acid-containing (meth)acrylic acid ester, such as 2-(meth)acryloyloxyethyl phthalate and 2-(meth)acryloyloxyethyl phthalate; a fluorine group-containing (meth)acrylic acid ester, such as perfluorooctylethyl (meth)acrylate; a phosphate group-containing (meth)acrylic acid ester, such as ethyl phosphate (meth)acrylate; an epoxy group-containing (meth)acrylic acid ester, such as glycidyl (meth)acrylate; and an amino group-containing (meth)acrylic acid ester, such as dimethylaminoethyl (meth)acrylate. As used herein, the term "(meth)acrylic" encompasses "acrylic" and "methacrylic". The term "(meth)acryloyl" encompasses "acryloyl" and "methacryloyl".

As the monomers represented by the general formula (1), one type thereof may be solely used, and two or more types thereof may also be used in combination. Among these, a (meth)acrylic acid alkyl ester is preferable. Furthermore, methyl (meth)acrylate, ethyl (meth)acrylate and n-butyl (meth)acrylate; and a (meth)acrylic acid alkyl ester having an alkyl group of 6 to 12 carbon atoms are more preferable. By selecting these, it is possible to reduce a swelling property with respect to the electrolytic solution and improve cycle characteristics.

The ratio of the acrylate monomer unit in the acrylate-based polymer is usually 50% by mass or more, preferably 60% by mass or more, and more preferably 70% by mass or more. The upper limit is usually 100% by mass or less, and may be 98% by mass or less or 95% by mass or less.

The acrylate-based polymer may be formed by using a copolymerizable carboxylic acid group-containing monomer in addition to the monomer represented by the general formula (1). Thus, the acrylate-based polymer may contain a monomer unit having a structure formed by polymerizing a carboxylic acid group-containing monomer. Specific examples of the carboxylic acid group-containing monomer may include a monobasic acid-containing monomer such as acrylic acid and methacrylic acid; and a dibasic acid-containing monomer such as maleic acid, fumaric acid, and itaconic acid. The amount of the carboxylic acid group-containing monomer in the copolymerization is usually 0.1 part by weight or more, preferably 0.5 part by weight or more, and more preferably 1 part by weight or more, and is usually 50 parts by weight or less, preferably 30 parts by weight or less, and more preferably 10 parts by weight or less, relative to 100 parts by weight of the monomer represented by the general formula (1).

As the acrylate-based polymer, a copolymerizable nitrile group-containing monomer can be used in addition to the monomer represented by the general formula (1). Thus, the acrylate-based polymer may contain a monomer unit having a structure formed by polymerizing a nitrile group-containing monomer. Specific examples of the nitrile group-containing monomer may include acrylonitrile and methacrylonitrile. The amount of the copolymerizable nitrile group-containing monomer is usually 0.1 part by weight or more, preferably 0.5 part by weight or more, and more preferably 1 part by weight or more, and is usually 40 parts by weight or less, preferably 30 parts by weight or less, and more preferably 10 parts by weight or less, relative to 100 parts by weight of the monomer represented by the general formula (1).

The conjugated diene-based polymer is a homopolymer of a conjugated diene or a copolymer obtained by polymerizing a monomer mixture containing a conjugated diene, or hydrogenated products thereof. Thus, the conjugated diene-based polymer may contain one or more monomer units (hereinafter referred to as "conjugated diene-based monomer unit") selected from the group consisting of a monomer unit having a structure formed by polymerizing a conjugated diene and a monomer unit having a structure formed by hydrogenating the monomer unit having a structure formed by polymerizing a conjugated diene. As the conjugated diene, it is preferable to use 1,3-butadiene, 2-methyl-1,3-butadiene, 2,3-dimethyl -1,3-butadiene, 2-chloro-1,3-butadiene, substituted linear conjugated pentadienes, substituted and side chain conjugated hexadienes, or the like. It is more preferable to use 1,3-butadiene because it can improve flexibility when used for forming an electrode and can increase resistance to cracking. The monomer mixture may contain two or more of these conjugated dienes.

When the conjugated diene-based polymer is a copolymer of the aforementioned conjugated diene and a monomer copolymerizable therewith, examples of the copolymerizable monomer may include an $\alpha,\beta$-unsaturated nitrile compound and a vinyl compound having an acid component.

Specific examples of the conjugated diene-based polymer may include a conjugated diene homopolymer such as polybutadiene (BR) and polyisoprene (IR); an aromatic vinyl-conjugated diene copolymer such as a styrene-butadiene copolymer (SBR) and a styrene-isoprene copolymer (SIR) both of which may be carboxy-modified; a copolymer of aromatic vinyl-conjugated diene-carboxylic acid group-containing monomers such as a styrene-butadiene-methacrylic acid copolymer and a styrene-butadiene-itaconic acid copolymer; a vinyl cyanide-conjugated diene copolymer such as an acrylonitrile-butadiene copolymer (NBR); a block polymer such as a styrene-butadiene-styrene copolymer (SBS) and a styrene-isoprene-styrene (SIS); and hydrogenated products of conjugated diene-based polymers such as hydrogenated SBR, hydrogenated NBR, hydrogenated SBS, and hydrogenated SIS.

The ratio of the conjugated diene-based monomer unit in the conjugated diene-based polymer is preferably 20% by mass or more, and more preferably 30% by mass or more, and is preferably 80% by mass or less, and more preferably 70% by mass or less. When the ratio of the conjugated diene-based monomer unit is equal to or less than the aforementioned upper limit value, the electrolytic solution resistance can be improved when the electrode is formed. When the ratio of the conjugated diene-based monomer unit is equal to or more than the aforementioned lower limit value, sufficient adhesion between the composite particles and the current collector layer can be ensured.

The fluorine-based polymer is a polymer containing a monomer unit containing a fluorine atom. Specific examples of the fluorine-based polymer may include polytetrafluoroethylene, polyvinylidene fluoride (PVDF), a tetrafluoroethylene-perfluoroalkyl vinyl ether copolymer, an ethylene-tetrafluoroethylene copolymer, an ethylenechlorotrifluoroethylene copolymer, and a perfluoroethylenepropene copolymer. Among these, it is preferable to contain PVDF.

As the binder, for example, a polymer that may be contained in the electrode mixture layer to be described later can be used.

The glass transition temperature $Tg1$ of the binder that may be contained in the first adhesion layer is, for example, -30°C or higher, preferably -20°C or higher, and more preferably -15°C or higher, and is, for example, 25°C or lower, preferably 20°C or lower, and more preferably 15°C or lower. This is because when the glass transition temperature $Tg1$ falls within the aforementioned range, the electroconductive particles, and the current collector layer and the electroconductive particles may be satisfactorily bonded to each other. Furthermore, this is because the strength of the first adhesion layer can be increased, and deformation of the electroconductive adhesion layer can be suppressed during the production of the electrode and during the use of the battery.

The glass transition temperature of the binder may be measured under condition of a rate of temperature increase of 20°C/min using a differential scanning calorimeter using a differential scanning calorimeter in accordance with JIS K 7121:1987.

It is preferable that the glass transition temperature $Tg1$ of the binder contained in the first adhesion layer is higher than the glass transition temperature $Tg2$ of the binder contained in the second adhesion layer to be described later. This is because when the $Tg1$ and the $Tg2$ have the aforementioned magnitude relationship, an electroconductive adhesion layer having a high strength of the layer and a high friction coefficient of the surface on the electrode mixture layer side is easily obtained.

The shape of the polymer (binder) that may be contained in the first adhesion layer is not particularly limited, but a particulate shape is preferred. This is because a small amount of the polymer can also produce an excellent binding power to improve the strength of the first adhesion layer. The median diameter of the particles of the polymer (binder) may be, for example, 0.01 $\mu$m or more and 1.0 $\mu$m or less. The median diameter of the particles of the polymer may be determined as a particle diameter (D50) at which the cumulative volume calculated from the small-diameter side in a particle size distribution (on a volume basis) obtained by measurement of the particle diameter of the particles with a laser diffraction type particle diameter distribution measurement device becomes 50%.

The containing ratio of the binder in the first adhesion layer is usually 0.1 part by weight or more, preferably 1.0 part by weight or more, and more preferably 5.0 parts by weight or more, and is, for example, 60 parts by weight or less, preferably 50 parts by weight or less, and more preferably 45 parts by weight or less, relative to 100 parts by weight of the electroconductive particles. This is because when the containing ratio of the binder in the first adhesion layer is equal to or more than the aforementioned lower limit value, the electroconductive particles, and the current collector layer and the electroconductive particles may be satisfactorily bonded to each other. Furthermore, this is because when the containing ratio of the binder in the first adhesion layer is equal to or less than the aforementioned upper limit value, the resistance between the current collector layer and the electrode active material may be effectively reduced.

The first adhesion layer contains at least the electroconductive particles and the binder, and may further contain an optional component, as necessary. As the optional component, for example, carboxymethyl cellulose and a surfactant may be used. As the carboxymethyl cellulose and the surfactant, carboxymethyl cellulose and a surfactant described in Japanese Patent Application Laid-Open No. 2010-108971 A may be used.

The first adhesion layer is usually disposed in direct contact with the current collector layer without another layer interposed therebetween. Furthermore, the first adhesion layer is usually disposed on the entire surface of an area where the electrode mixture layer is disposed.

The thickness of the first adhesion layer may be such a thickness that the electroconductivity of the current collector layer and the electrode mixture layer may be ensured. The thickness of the first adhesion layer is usually 0.1 $\mu$m or more, preferably 0.2 $\mu$m or more, and more preferably 0.3 $\mu$m or more, and is usually 3.0 $\mu$m or less, preferably 2.0 $\mu$m or less, and more preferably 1.0 $\mu$m or less. This is because when the thickness of the first adhesion layer is equal to or more than the aforementioned lower limit value, the resistance between the current collector layer and the electrode active material can be effectively reduced. Further, this is because when the thickness of the first adhesion layer is equal to or less than the aforementioned upper limit value, the tackiness of the surface of the electroconductive adhesion layer can be improved to achieve satisfactory high-speed moldability. In addition, high-temperature storage stability can be improved.

The thickness of the first adhesion layer represents a distance $t1$ in the thickness direction between the surface of the adhesion layer 21 on the current collector layer 1 side and the surface where the second adhesion layer 2 is formed, as shown in FIG. 1. The thickness of the first adhesion layer 21 at an area where the second adhesion layer 22 is formed may be different from the thickness of the first adhesion layer 21 at an area where the second adhesion layer 22 is not formed, but in this case, the thickness of the first adhesion layer 21 may be measured at the area where the second adhesion layer 22 is not formed. The thickness of the first adhesion layer may be determined, for example, by observing the cross section of the electrode with a transmission electron microscope.

The tackiness of the surface of the first adhesion layer in the electroconductive adhesion layer is, for example, 0.01 N or more, and preferably 0.02 N or more. Further, it is preferable that the tackiness of the surface of the first adhesion layer in the electroconductive adhesion layer is higher, but the tackiness is usually about 0.1 N or less.

The tackiness of the surface of the first adhesion layer in the electroconductive adhesion layer may be measured as follows. A sample having the first adhesion layer on the current collector layer is prepared, and a probe with a diameter of 5 mm is pressed onto the surface of the first adhesion layer of the sample at a speed of 1 mm/second and held for 10 seconds. Then, a maximum load at the time of pulling the probe at a speed of 1 mm/second is measured as the tackiness. The measurement may be performed, for example, with a tacking test machine ("TAC-1000" manufactured by RHESCA Co., Ltd.). As the sample, the first adhesion layer disposed on the current collector layer can also be used in a process of producing an electrode.

[3.2. Second adhesion layer]

The second adhesion layer is a layer that is partially disposed on the first adhesion layer, and that is in contact with the electrode mixture layer. The second adhesion layer is either the layer having the following configuration (a) or the layer having the following configuration (b).

(a) The layer that contains the electroconductive particles and the binder and in which the containing ratio of the electroconductive particles is lower than that in the first adhesion layer.

(b) The layer containing the binder and not containing electroconductive particles.

When the second adhesion layer is the layer having the aforementioned configuration (a), the second adhesion layer usually contains at least the binder and the electroconductive particles, and may contain an optional component, as necessary. In the present embodiment, when the second adhesion layer contains the electroconductive particles, the containing ratio of the electroconductive particles in the second adhesion layer is usually lower than the containing ratio of the electroconductive particles in the first adhesion layer.

The containing ratio of the electroconductive particles in the second adhesion layer is usually higher than 0% by mass and is 0.1% by mass or more, with respect to the solid content contained in the second adhesion layer. Further, the containing ratio of the electroconductive particles in the second adhesion layer is, for example, 30% by mass or less, more preferably 20% by mass or less, and still more preferably 10% by mass or less, with respect to the solid content contained in the second adhesion layer.

On the other hand, when the second adhesion layer has the aforementioned configuration (b), the second adhesion layer does not contain electroconductive particles, contains the binder, and may contain an optional component, as necessary. Further, the second adhesion layer does not usually contain a material having electroconductivity other than the electroconductive particles.

In the present embodiment, it is more preferable that the second adhesion layer has the layer having the configuration (b) of the layer having the configuration (a) or the layer having the configuration (b), that is, the second adhesion layer contains the binder and does not contain the electroconductive particles. This is because when the second adhesion layer does not contain the electroconductive particles, the containing ratio of the binder on the surface of the electroconductive adhesion layer on the electrode mixture layer side can be increased to increase the friction coefficient, and hence the movement of the composite particles during the production of the electrode can be effectively restricted to mold the electrode at a higher speed.

The electroconductive particles that may be contained in the second adhesion layer may be appropriately selected from the described electroconductive particles that may be contained in the first adhesion layer, and used. In the present embodiment, the electroconductive particles contained in the first adhesion layer may be referred to as electroconductive particles 1, and the electroconductive particles contained in the second adhesion layer may be referred to as electroconductive particles 2. In addition, the type of the electroconductive particles 1 and the type of the electroconductive particles 2 may be the same as or different from each other.

It is preferable that the binder that may be contained in the second adhesion layer is a binder of which the glass transition temperature Tg2 falls within a predetermined range. Specifically, the glass transition temperature Tg2 of the binder that may be contained in the second adhesion layer is usually -50°C or higher, preferably -45°C or higher, and more preferably -40°C or higher. Further, the glass transition temperature Tg2 is usually -10°C or lower, preferably -15°C or lower, and more preferably -25°C or lower. This is because when the glass transition temperature Tg2 falls within the aforementioned range, the strength of the second adhesion layer and the adhesion to the composite particles can be improved. In addition, it is preferable that the glass transition temperature Tg2 of the binder contained in the second adhesion layer is lower than the glass transition temperature Tg1 of the binder contained in the first adhesion layer.

The shape of the binder that may be contained in the second adhesion layer is not particularly limited, but a particulate shape is preferable because only a small amount of the binder can produce an excellent binding power to improve the strength of the second adhesion layer. Further, when the strength of the second adhesion layer is satisfactory, the movement of the composite particles is likely to be physically restricted, and hence the movement of the particles during the production of the electrode can be effectively restricted. The median diameter of the particles of the binder is usually 0.01 μm or more, preferably 0.05 μm or more, more preferably 0.1 μm or more, and still more preferably 0.15 μm or more, and is usually 1.0 μm or less, preferably 0.5 μm or less, more preferably 0.4 μm or less, and still more preferably 0.25 μm or less. It is preferable that the median diameter of the particles of the binder contained in the second adhesion layer is smaller than the median diameter of the electroconductive particles contained in the first adhesion layer.

The binder that may be contained in the second adhesion layer may be appropriately selected from the polymers described as the binder that may be contained in the first adhesion layer, and used. In the present embodiment, the binder contained in the first adhesion layer may be referred to as binder 1, and the binder contained in the second adhesion layer may be referred to as binder 2. In addition, the type of the binder 1 and the type of the binder 2 may be the same as or different from each other.

The optional component that may be contained in the second adhesion layer may be appropriately selected from the polymers described as the optional component that may be contained in the first adhesion layer, and used. In the present embodiment, the optional component contained in the first adhesion layer may be referred to as optional component 1, and the optional component contained in the second adhesion layer may be referred to as optional component 2. In addition, the type of the optional component 1 and the type of the optional component 2 may be the same as or different from each other.

The second adhesion layer is directly disposed on the first adhesion layer. A layer "directly" disposed on another layer means that yet another layer is not present between the two layers unless otherwise specified. Alternatively, the second adhesion layer is partially disposed on the first adhesion layer. In the present embodiment, it is preferable that the second adhesion layer is regularly disposed at an area that is part of the surface of the first adhesion layer. This is because the second adhesion layer may be easily produced by a printing method or the like. Further, this is because an electrode is easily produced so as to have low resistance by adjusting balance between the area where the second adhesion layer is disposed on the electroconductive adhesion layer and the area where the second adhesion layer is not disposed on the electroconductive adhesion layer.

When the second adhesion layer is regularly disposed at the area that is part of the surface of the first adhesion layer, the second adhesion layer may be, for example, linear as viewed in the thickness direction, and be disposed in a stripe pattern in which the area where the second adhesion layer is disposed and the area where the second adhesion layer is not disposed are alternately disposed. Alternatively, the second adhesion layer can be disposed in a stripe pattern of dashed lines by disposing a rectangular second adhesion layer instead of the linear second adhesion layer. For example, a plurality of second adhesion layers having, for example, at least a shape of a circular shape, an elliptic shape, or a polygonal shape, may be disposed at predetermined intervals. For example, the second adhesion layer may be regularly disposed in a shape obtained by pattern application described in Japanese Patent Application Laid-Open No. 2014-078497 A.

Further, the second adhesion layer needs only to be disposed on at least the first adhesion layer, but it is preferable that the second adhesion layer is partially disposed on the surface of the current collector layer on the side where the first adhesion layer is disposed. Specifically, it is preferable that the second adhesion layer 22 is disposed continuously on the first adhesion layer 21 and the current collector layer 1 so as to cover an edge of the first adhesion layer 21, as shown in FIG. 2. In general, the composite particles tend to be unlikely to be held at the edge of the electrode due to the structure. Accordingly, when the electrode mixture layer is disposed on the first adhesion layer containing a large amount of the electroconductive particles at the edge of the electrode, the first adhesion layer cannot sufficiently bind the composite particles and cannot hold them, and hence there is a risk in that the electrode mixture layer is detached. On the other hand, when the second adhesion layer having a satisfactory binding power is disposed continuously on the first adhesion layer and the current collector layer, the binding property between the composite particles contained in the electrode mixture layer and the second adhesion layer can be enhanced. Accordingly, the detachment of the electrode mixture layer at the edge of the electrode can be effectively suppressed. Further, when a non-aqueous secondary battery is produced using the electrode and stored at a high temperature, deterioration starting from the detachment area of the electrode mixture layer at the edge of the electrode may be suppressed, and hence the high-temperature storage stability of the battery can be improved. When the second adhesion layer is disposed so as to cover the edge of the first adhesion layer, the second adhesion layer is disposed so as to cover the edge of at least part of the first adhesion layer. For example, when the shape of the electrode is long-length, it is preferable that the second adhesion layer is disposed so as to cover two edges positioned in the width direction of the first adhesion layer.

The second adhesion layer may be appropriately selected depending on the application of the electrode and the like to a degree in which the first adhesion layer is partially covered. The ratio of the area of the first adhesion layer covered with the second adhesion layer relative to the total area of the first adhesion layer (hereinafter sometimes referred to as coverage ratio of the first adhesion layer) is usually 20% or more, preferably 30% or more, and more preferably 40% or more. Further, the coverage ratio of the first adhesion layer is usually 80% or less, preferably 70% or less, and more preferably 50% or less. This is because when the coverage ratio of the first adhesion layer is equal to or more than the aforementioned lower limit value, the high-speed moldability can be enhanced, and when the coverage ratio of the first adhesion layer falls within the aforementioned range, a reduction in resistance of the electrode and the high-speed moldability may be effectively exhibited.

The thickness of the second adhesion layer is usually 0.1 $\mu$m or more, preferably 0.2 $\mu$m or more, and more preferably 0.3 $\mu$m or more, and is usually 2.0 $\mu$m or less, preferably 1.0 $\mu$m or less, and more preferably 0.8 $\mu$m or less. This is because when the thickness of the second adhesion layer falls within the aforementioned range, the strength of the second adhesion layer can be enhanced. Further, surface irregularities can be formed on the surface of the electro-conductive adhesion layer on the second adhesion layer side, and hence the movement of the composite particles during the production of the electrode is easily restricted, and the high-speed moldability may be improved.

In the present embodiment, it is preferable that the first adhesion layer and the second adhesion layer are disposed so that the ratio (t2/t1) of the thickness t2 of the second adhesion layer relative to the thickness t1 of the first adhesion layer falls within a predetermined range. The ratio (t2/t1) of the thickness t2 of the second adhesion layer relative to the thickness t1 of the first adhesion layer is preferably 0.1 or more, more preferably 0.2 or more, and still more preferably 0.5 or more, and is preferably 10 or less, more preferably 3 or less, and still more preferably 1 or less. This is because when the thickness ratio (t2/t1) is equal to or more than the lower limit value, desired high-speed moldability is stably obtained, and when the thickness ratio is equal to or less than the upper limit value, a reduction effect on resistance is significantly obtained.

The thickness of the second adhesion layer represents a distance t2 in the thickness direction between the surface of the second adhesion layer 22 on the first adhesion layer 21 side and the surface where the electrode mixture layer 3 is formed. The thickness of the second adhesion layer may be determined, for example, by observing the cross section of the electrode with a transmission electron microscope.

The tackiness of the surface of the second adhesion layer in the electroconductive adhesion layer is, for example, more than 0.1 N, preferably 0.3 N or more, and more preferably 0.4 N or more. It is preferable that the tackiness of the surface of the second adhesion layer in the electroconductive adhesion layer is higher, but the tackiness is, for example, about 3.0 N or less.

The tackiness of the surface of the second adhesion layer in the electroconductive adhesion layer is usually higher than the tackiness of the surface of the first adhesion layer in the electroconductive adhesion layer. In an example, the ratio (second adhesion layer/first adhesion layer) of the tackiness of the surface of the second adhesion layer relative to the tackiness of the surface of the first adhesion layer is usually more than 1.0, preferably 30 or more, more preferably 70 or more, still more preferably 120 or more, and preferably 150 or more. The upper limit thereof may be, for example, 300 or less, preferably 220 or less, and more preferably 170 or less.

Regarding the tackiness of the surface of the second adhesion layer in the electroconductive adhesion layer, a sample in which the first adhesion layer is disposed on the current collector layer and the second adhesion layer is partially disposed on the first adhesion layer is prepared, and the tackiness with respect to the surface of the second adhesion layer may be measured in the same manner as the method for measuring the tackiness of the first adhesion layer. As the sample, a sample having the second adhesion layer disposed on the first adhesion layer on the current collector layer can also be used in a process of producing an electrode.

[3.3. Tackiness of electroconductive adhesion layer]

The tackiness of the surface of the electroconductive adhesion layer in the present embodiment is usually, for example, more than 0.1 N, preferably 0.3 N or more, and more preferably 0.4 N or more. It is preferable that the tackiness of the surface of the electroconductive adhesion layer is higher, but the tackiness is, for example, about 3.0 N or less. Regarding the tackiness of the electroconductive adhesion layer, a sample in which the electroconductive adhesion layer having the first adhesion layer and the second adhesion layer is disposed on the current collector layer is prepared, and the tackiness with respect to the surface of the second adhesion layer of the sample may be measured in the same manner as the method for measuring the tackiness of the first adhesion layer. This is because when the tackiness of the surface of the electroconductive adhesion layer falls within the aforementioned range, both a reduction in resistance of the electrode for a non-aqueous secondary battery and the high-speed moldability can be effectively achieved. The tackiness of the surface of the electroconductive adhesion layer may be usually the same as the tackiness of the surface of the second adhesion layer.

[4. Electrode mixture layer]

The electrode mixture layer is a layer disposed on the electroconductive adhesion layer and contains the electrode active material and the binder. In the present embodiment, since the electrode mixture layer is usually produced by using composite particles containing the electrode active material and the binder, the electrode mixture layer can contain composite particles. In addition, when the electrode mixture layer further contains an optional component described later, since it is preferable to produce the electrode mixture layer by using composite particles containing the optional component, the electrode mixture layer preferably includes composite particles containing the optional component.

The electrode active material can be appropriately selected depending on the type of the non-aqueous secondary battery. The electrode active material may be a positive electrode active material or a negative electrode active material. When the non-aqueous secondary battery is a lithium ion secondary battery, examples of the positive electrode active material may include a metal oxide that can be reversibly doped or de-doped with lithium ions. Examples of the metal oxide may include lithium cobaltate ($LiCoO_2$), lithium nickelate ($LiNiO_2$), lithium manganate ($LiMn_2O_4$), lithium iron phosphate ($LiFeO_4$), and a ternary active material (e.g., $LiCo_{1/3}Ni_{1/3}Mn_{1/3}O_2$, $LiNi_{0.5}Co_{0.2}Mn_{0.3}O_2$) in which lithium cobaltate is partially substituted with nickel and manganese. As the positive electrode active materials, one type thereof may be solely used, and two or more types thereof may also be used in combination.

When the non-aqueous secondary battery is a lithium ion secondary battery, examples of the negative electrode active material may include low-crystalline carbon (amorphous carbon) (e.g., readily graphitizable carbon, poorly graphitizable carbon, pyrolytic carbon); graphite (e.g., natural graphite, artificial graphite); and alloy-based materials containing tin, silicon, or the like; oxides (e.g., silicon oxide, tin oxide, lithium titanate). As the negative electrode active materials, one type thereof may be solely used, and two or more types thereof may also be used in combination.

The shape of the electrode active material is preferably granular. When the particle shape is granular, the electrode active material can be molded to form a highdensity electrode.

The median diameter of the electrode active material is preferably 0.1 μm or more and 100 μm or less, more preferably 0.3 μm or more and 50 μm or less, and still more preferably 0.5 μm or more and 30 μm or less. When the median diameter of the electrode active material falls within the aforementioned range, the electrode active material can be suitably used as a material for a lithium ion battery electrode. The median diameter of the electrode active material is a volume-based median diameter and may be measured by a method similar to the aforementioned method for measuring the median diameter of a polymer.

The containing ratio of the electrode active material in the electrode mixture layer is preferably 90% by mass or more, more preferably 92% by mass or more, and still more preferably 95% by mass or more, and is preferably 99.5% by mass or less, more preferably 99% by mass or less, and still more preferably 98.5% by mass or less. When the containing ratio of the electrode active material is equal to or more than the aforementioned lower limit, a high electrochemical device capacity can be obtained. When the containing ratio of the electrode active material is equal to or less than the aforementioned upper limit, satisfactory high-temperature storage characteristics can be obtained. When the electrode mixture layer includes composite particles, the containing ratio of the electrode active material in 100% by mass of the composite particles can fall within the aforementioned numerical range.

A polymer is usually used as the binder that may be contained in the electrode mixture layer. The polymer as the binder may be a water-insoluble polymer. Preferable examples of the binder that may be contained in the electrode mixture layer may include polymers such as an acrylate-based polymer, a conjugated diene-based polymer, and a fluorine-based polymer. A conjugated diene-based polymer is preferable from the viewpoint of the molding speed when the composite particles containing the electrode active material and the binder are press-molded by a dry process to produce an electrode for a non-aqueous secondary battery.

A fluorine-based polymer that may be contained in the electrode mixture layer may be suitably selected from the polymers described as the fluorine-based polymers that may be contained in the first adhesion layer, and used.

A conjugated diene-based polymer that may be contained in the electrode mixture layer may be suitably selected from the polymers described as the conjugated diene-based polymers that may be contained in the first adhesion layer, and used.

As described above, the acrylate-based polymer is a polymer containing a monomer unit having a structure formed by polymerizing a monomer [(meth)acrylic acid ester] represented by the general formula (1). The monomer represented by the general formula (1) can be suitably selected from the monomers described as the monomers for the acrylate-based polymer that may be contained in the first adhesion layer, and used. The (meth) acrylic acid ester as the monomer represented by the general formula (1) can be used solely or in combination of two or more types. Among these, a (meth)acrylic acid alkyl ester is preferable, and methyl (meth)acrylate, ethyl (meth)acrylate, and n-butyl (meth)acrylate; and a (meth) acrylic acid alkyl ester having an alkyl group of 6 to 12 carbon atoms are more preferable. By selecting these, it is possible to reduce the swelling property to the electrolytic solution, and to improve the cycle characteristics.

The ratio of the acrylate monomer unit in the acrylate-based polymer is usually 50% by mass or more, preferably 60% by mass or more, and more preferably 70% by mass or more. The upper limit is usually 100% by mass or less, and may be 98% by mass or less or 95% by mass or less.

When the acrylate-based polymer is a copolymer of the monomer represented by the general formula (1) and a monomer copolymerizable therewith, examples of the copolymerizable monomers may include carboxylic acid esters having 2 or more carbon-carbon double bonds, an aromatic vinyl-based monomer, an amide-based monomer, olefins, a diene-based monomer, vinyl ketones, and a heterocyclic vinyl compound, and the like, as well as an $\alpha,\beta$-unsaturated nitrile compound and a vinyl compound having an acid component.

Among the aforementioned copolymerizable monomers, it is preferable to use an aromatic vinyl-based monomer, since the resulting electrode is less likely to deform and has high strength when produced, and sufficient adhesion between the electroconductive adhesive layer and the current collector can be obtained. Examples of the aromatic vinyl-based monomer may include styrene and the like.

When the acrylate-based polymer contains an aromatic vinyl monomer, the ratio of the aromatic vinyl monomer in the acrylate-based polymer is, for example, 10% by mass or more, preferably 15% by mass or more, and more preferably 20% by mass or more, and is, for example, 40% by mass or less, preferably 30% by mass or less, and more preferably 30% by mass or less. This is because when the ratio of the aromatic vinyl monomer falls within the aforementioned numerical range, the adhesion between the active material layer and the electroconductive adhesive layer can be sufficiently increased.

As the binder, for example, a polymer that may be contained in the binder of the first adhesion layer can be used.

In the present embodiment, since the electrode mixture layer is usually produced by using composite particles containing the electrode active material and the binder described above, the electrode mixture layer can include composite particles containing the electrode active material and the binder.

The containing ratio of the binder in the electrode mixture layer is preferably 0.1% by mass or more, more preferably 0.3% by mass or more, and still more preferably 0.5% by mass or more, and is preferably 5% by mass or less, more preferably 3.5% by mass or less, and still more preferably 2.5% by mass or less. When the electrode mixture layer includes composite particles, the containing ratio of the binder in 100% by mass of the composite particles may fall within the aforementioned numerical range.

The electrode mixture layer contains at least the electrode active material and the binder, but may further contain an optional component, as necessary. Examples of the optional components may include carboxymethyl cellulose, a water-soluble polymer containing an acidic functional group, and an electroconductive material.

The electrode mixture layer may contain, for example, carboxymethyl cellulose as an optional component. Carboxymethyl cellulose preferably has a molecular weight of more than 50,000, preferably 100,000 or more, from the viewpoint of obtaining an effect as a thickening agent, and from the viewpoint of obtaining satisfactory high-temperature storage characteristics and satisfactory cycle characteristics. The upper limit of the molecular weight is not particularly limited, but may be, for example, 1,000,000 or less. The molecular weight may be a weight-average molecular weight. The molecular weight may be measured by a measurement method such as GPC. The containing ratio of carboxymethyl cellulose in the electrode mixture layer is preferably 0.3% by mass or more and 5% by mass or less. When the electrode mixture layer includes composite particles, the containing ratio of carboxymethyl cellulose in 100% by mass of the composite particles may fall within the aforementioned numerical range.

The electrode mixture layer may optionally contain a water-soluble polymer containing an acidic functional group. The term "water-soluble" of a polymer means that when 0.5 g of the polymer is dissolved in 100 g of water at a temperature of 25°C, the insoluble content is less than 1.0% by mass.

The water-soluble polymer containing an acidic functional group may be a polymer containing a monomer unit formed by polymerization of a monomer having an acidic functional group and a polymerizable unsaturated bond. The water-soluble polymer containing an acidic functional group may be a polymer other than carboxymethyl cellulose. Examples of such polymers may include polyacrylic acid, polymethacrylic acid, polyitaconic acid, polymaleic acid, polyfumaric acid, poly 2-hydroxyethyl acrylate (PHEA), poly 2-hydroxyethyl methacrylate (PHEMA), and mixtures thereof. Among these, polyacrylic acid, polymethacrylic acid, polyitaconic acid, poly 2-hydroxyethyl acrylate, and mixtures thereof are preferable, and polymethacrylic acid is more preferable. By adopting the preferred polymers, satisfactory cycle characteristics can be obtained.

The molecular weight of the water-soluble polymer containing an acidic functional group is usually 1500 or more, preferably 2500 or more, and more preferably 5000 or more, and is usually 50000 or less, preferably 30000 or less, and more preferably 20000 or less. The molecular weight is a weight-average molecular weight. The molecular weight may be measured by a measuring method such as GPC.

The containing ratio of the water-soluble polymer containing an acidic functional group in the electrode mixture layer is preferably 0.01% by mass or more and 1.0% by mass or less. When the electrode mixture layer includes composite particles, the containing ratio of the water-soluble polymer containing the acidic functional group in 100% by mass of the composite particles may fall within the aforementioned numerical range.

The electrode mixture layer may optionally include an electroconductive material. The electroconductive material is a component for ensuring electrical contact between electrode active materials. Examples of the electroconductive material may include carbon black (e.g., acetylene black, Ketchen black (registered trademark), furnace black, etc.), single-walled or multi-walled carbon nanotubes (multi-walled carbon nanotubes include a cup-stack type), carbon nanohorns, vapor-grown carbon fibers, milled carbon fibers obtained by crushing polymer fibers after firing, single-walled or multi-walled graphene, electroconductive carbon materials such as carbon nonwoven fabric sheets obtained by firing nonwoven fabrics made of polymer fibers, and fibers or foils of various metals. As these compounds, one type thereof may be solely used and two or more types thereof may also be used in combination. Among these, it is preferable that the electroconductive material includes carbon nanotubes (hereinafter, they may be described as "CNT"). Here, CNTs usually tend to aggregate and are difficult to disperse. However, when the electrode mixture layer contains the water-soluble polymer containing an acidic functional group as an optional component, even the electroconductive material including CNTs can be dispersed satisfactorily.

When the electrode mixture layer includes composite particles, the composite particles may contain a solvent as an optional component. The amount of solvent contained in the composite particles is usually 10% by mass or less, preferably 5% by mass or less, and more preferably 2% by mass or less.

The median diameter of the composite particles that may be included in the electrode mixture layer is usually 0.1 $\mu$m or more, preferably 10 $\mu$m or more, and more preferably 40 $\mu$m or more, and is usually 200 $\mu$m or less, preferably 150 $\mu$m or less, and more preferably 100 $\mu$m or less. The median diameter of the composite particles can be appropriately adjusted by selecting the material of the composite particles and adjusting the granulation conditions. The median diameter of the composite particles may be determined as a particle diameter (D50) at which the cumulative volume calculated from the small-diameter side in a particle size distribution (on a volume basis) obtained by measurement of the particle diameter of the particles with a laser diffraction/scattering particle diameter distribution measuring device (for example, manufactured by Nikkiso Co., Ltd., product name "Microtruck MT-3200 II") becomes 50%.

The production method of the composite particles is not particularly limited, and can be produced by a known production method. For example, the composite particles may be produced by production methods described in International Publication No. 2019/039560 or International Publication No. 2021/172208.

The electrode mixture layer is usually provided directly on the electroconductive adhesion layer. The electrode mixture layer is provided on the entire surface of the region where the electroconductive adhesion layer is disposed.

The thickness of the electrode mixture layer can be appropriately selected in accordance with the application of the non-aqueous secondary battery.

The amount of the electrode mixture layer per unit area is sometimes referred to as a "basis weight". The basis weight of the electrode mixture layer is not limited, but in one example, it is usually 1 mg/cm$^2$ or more, preferably 2 mg/cm$^2$ or more, and more preferably 5 mg/cm$^2$ or more, and is usually 100 mg/cm$^2$ or less, preferably 50 mg/cm$^2$ or less, and more preferably 30 mg/cm$^2$ or less.

[5. Method for producing electrode for non-aqueous secondary battery]

The electrode for a non-aqueous secondary battery according to an embodiment of the present invention can be produced by any optional method, but it is preferable that the electrode for a non-aqueous secondary battery is produced by a production method including the following steps (A) and (B). Hereinafter, the production method will be described as a production method of the electrode for a non-aqueous secondary battery according to the present invention.

Step (A): a step of disposing the electroconductive adhesion layer on the current collector layer by performing

a step (A1) of disposing the first adhesion layer on the current collector layer; and
a step (A2) of partially disposing the second adhesion layer on the first adhesion layer.

Step (B): of disposing the electrode mixture layer on the second adhesion layer of the electroconductive adhesion layer by supplying composite particles containing an electrode active material and a binder thereonto and pressing the composite particles.

According to the present invention, by disposing the electroconductive adhesion layer on the current collector layer, the movement of the composite particles supplied onto the electroconductive adhesion layer can be restricted, so that the electrode can be produced at a high molding speed of the electrode mixture layer by pressing.

[5.1. Step (A): Step of disposing electroconductive adhesion layer]

The step (A) includes the step (A1) of disposing the first adhesion layer on the current collector layer and the step (A2) of partially disposing the second adhesion layer on the first adhesion layer. By performing the steps (A1) and (A2), the electroconductive adhesion layer can be disposed on the current collector layer.

The current collector layer used in the step (A) is preferably long-length. Here, the long-length current collector layer refers to a current collector with a length that is 5 times or more, preferably 10 times or more, the width. Specifically, the long-length current collector layer refers to a current collector layer having a length that allows a current collector to be wound into a rolled shape for storage or transportation. The upper limit of the length of the current collector layer is not particularly limited, and may be, for example, 100,000 times or less the width.

Examples of the method of disposing the first adhesion layer on the current collector layer in the step (A1) may include a method of forming the first adhesion layer by preparing a coating liquid containing materials for the first adhesion layer, applying the coating liquid onto the current collector layer, and drying the coating film. Examples of the solvent that may be used for the coating liquid may include ion-exchanged water.

The method of applying the coating liquid is not particularly limited, and any known method may be used. Specifically, a doctor blade method, a dipping method, a reverse roll method, a direct roll method, a gravure method, an extrusion method, a brush coating method, or the like may be used. The thickness of the coating film may be appropriately set depending on the thickness of the first adhesion layer obtained after drying.

The coating film of the first adhesion layer may be dried by known drying methods such as drying by warm air, hot air, or low humidity air, vacuum drying, and drying by irradiation with (far) infrared rays or electron beams. The drying temperature is, for example, 50°C or higher and 300°C or lower. The drying time is, for example, 2 hours or shorter.

Examples of the method of partially disposing the second adhesion layer on the first adhesion layer in the step (A2) may include a method of forming the second adhesive layer by preparing a coating liquid containing materials for the second adhesion layer, partially applying the coating liquid onto the first adhesion layer, and drying the coating film. The method of applying the coating liquid for the second adhesion layer may be any method as long as the second adhesion layer can be partially disposed on the first adhesion layer, and for example, printing methods such as an inkjet printing method, a gravure printing method, a screen printing method, or the like may be used. The thickness of the coating film may be appropriately set depending on the thickness of the second adhesion layer obtained after drying. The drying method, drying temperature, and drying time of the coating film for the second adhesion layer may be the same as the drying method, drying temperature, and drying time of the coating film for the first adhesion layer.

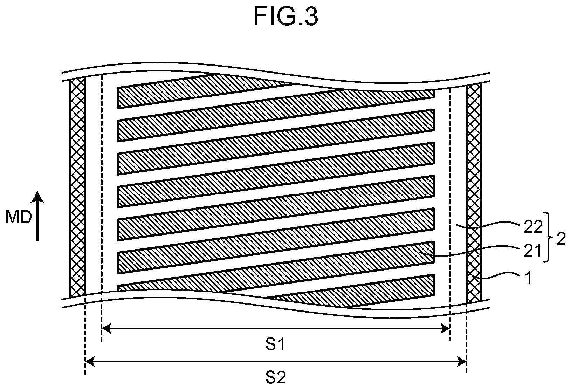

In the step (A2), for example, as shown in FIG. 3, linear second adhesion layers arranged in a stripe shape in a direction oblique to the conveying direction MD (the longitudinal direction of the current collector layer 1) of the current collector layer 1 may be disposed on the first adhesion layer 21. This is because when the second adhesion layers are disposed in a stripe shape in the direction oblique to the conveying direction of the current collector layer, the movement of the composite particles supplied in the step (B) can be easily restricted. FIG. 3 shows an example of disposing a plurality of linear second adhesion layers, but it is also possible to arrange rectangular second adhesion layers to dispose the second adhesion layers in a stripe shape with a broken line shape, although such a configuration is not illustrated.

A direction oblique to the conveying direction of the current collector layer generally refers to a direction that is neither the longitudinal direction nor the width direction of the current collector layer among directions perpendicular to the thickness direction.

The second adhesion layer is disposed so as to at least partially cover the first adhesion layer. For example, when the current collector layer 1 is long-length as shown in FIG. 3, it is preferable that the width S1 of the region where the first adhesion layer 21 is provided on the current collector layer 1 and the width S2 of the region where the second adhesion layer 22 is provided satisfy a relationship expressed by the following formula (1). Such a configuration is preferable because the strength of the edges of the electroconductive adhesion layer in the width direction can be increased, and the bonding property between the current collector layer and the electroconductive adhesion layer and the bonding property between the electroconductive adhesion layer and the electrode mixture layer can be improved.

$$100 \leq S2/S1 \times 100 \leq 110 \quad (1)$$

The formula (1) will be described in more detail. "$S2/S1 \times 100$" is preferably 100 or more, and more preferably 100.5 or more, and is preferably 110 or less, more preferably 105 or less, and more preferably 103 or less. When "$S2/S1 \times 100$" falls within such a range, the high-temperature storage stability of the secondary battery can be remarkably improved.

As shown in FIG. 3, the width S1 of the region where the first adhesion layer 21 is provided refers to a distance in the width direction of the region where the first adhesion layer 21 is provided in the width direction of the long-length current collector layer 1. The width S2 of the region where the second adhesion layer 22 is provided refers to a distance between the outermost edges of the two second adhesion layers provided on the outermost sides in the width direction of the current collector layer 1.

When the width S1 of the region where the first adhesion layer is provided on the current collector layer and the width S2 of the region where the second adhesion layer is provided satisfy the relationship expressed by the aforementioned formula (1), the first adhesion layer and the second adhesion layer are generally provided such that the region where the second adhesion layer is provided overlaps at least the entire region where the first adhesion layer is provided.

[5.2. Step (B): Step of disposing electrode mixture layer]

The step (B) is a step of disposing an electrode mixture layer on the second adhesion layer of the electro-conductive adhesion layer obtained in the step (A) by supplying the composite particles containing the electrode active material and the binder thereonto, and pressing the composite particles.

There is no restriction on the form of the binder that may be contained in the composite particles supplied onto the second adhesion layer. Therefore, when a polymer is used as the binder, the polymer may be a particulate polymer or a non-particulate polymer. The particulate polymer is a particle of the polymer described as the binder that may be contained in the electrode mixture layer. The non-particulate polymer is a polymer having a non-particulate form and may have, for example, an amorphous shape. Such a non-particulate polymer may be, for example, a dissolved polymer that can be dissolved in a solvent used in the production of composite particles, and may be an amorphous polymer formed by drying the solvent in the production process of composite particles. In an example, a non-particulate polymer may be used as the binder for a positive electrode and a particulate polymer may be used as the binder for a negative electrode. The volume-based median diameter of the particulate polymer is, for example, 40 nm or more, preferably 50 nm or more, and more preferably 70 nm or more, and is, for example, 500 nm or less, preferably 400 nm or less, and more preferably 300 nm or less.

Examples of the method for supplying the composite particles onto the second adhesion layer of the electro-conductive adhesion layer may include a method in which a current collector layer provided with the electroconductive adhesion layer is conveyed with rolls and the composite particles are supplied onto the conveyed current collector layer using a known supply device.

Examples of the method in which the electrode mixture layer is formed by pressing the composite particles may include a method using a roll-type press molding apparatus provided with a pair of rolls. In the present invention, the roll press molding can be performed while restricting the movement of the composite particles supplied onto the electro-conductive adhesion layer, thereby increasing the molding speed.

The temperature during the roll press molding is preferably 0°C or higher and 200°C or lower, and more preferably 25°C or higher and 150°C or lower. The press linear pressure between the rolls during the roll press molding is preferably 0.2 kN/cm or more, and more preferably 1.5 kN/cm or more, and is preferably 30 kN/cm or less, and more preferably 15 kN/cm or less. By keeping the linear pressure within the aforementioned range, the uniformity of the thickness of the electrode mixture layer can be improved.

The molding speed of the roll press molding is preferably 10 m/min or more, and more preferably 30 m/min or more, and is preferably 70 m/min or less, and more preferably 50 m/min or less.

Furthermore, in order to eliminate variations in the thickness of the molded electrode and increase the density of the electrode active material layer to achieve a high capacity, further pressing may be applied after the molding. The pressing method in this case is usually performed by a press process using rolls. In the press process using rolls, generally, two cylindrical rolls are arranged vertically and in parallel at a narrow gap, and the rolls are rotated in opposite directions, and the electrodes are pressed by allowing the rolls to bite them. At this time, the temperature of the rolls may be adjusted by heating or cooling, as necessary.

[6. Modification]

In the present invention, for example, the following electrode can also be provided as an electrode having reduced resistance and satisfactory high-speed moldability.

An electrode for a non-aqueous secondary battery including the current collector layer, the electroconductive adhesion layer, and the electrode mixture layer in this order, in which the tackiness of the surface of the electroconductive adhesion layer on the electrode mixture layer side is more than 0.1 N.

According to a modification, the electroconductive adhesion layer has electroconductivity and the tackiness on the electrode mixture layer side is high, and hence press molding can be performed while the resistance is reduced and the movement of composite particles is restricted during the production of the electrode. Accordingly, an electrode having high high-speed moldability can be obtained.

The tackiness of the electroconductive adhesion layer is usually more than 0.1 N, preferably 0.3 N or more, and more preferably 0.4 N or more. It is preferable that the tackiness of the surface of the second adhesion layer in the electroconductive adhesion layer is higher, but the tackiness is, for example, about 3.0 N or less. Regarding the tackiness of the electroconductive adhesion layer, a sample in which the electroconductive adhesion layer is disposed on the current collector layer is prepared, and the tackiness with respect to the surface of the electroconductive adhesion layer of the sample may be measured in the same manner as the method for measuring the tackiness of the first adhesion layer.

It is preferable that the electroconductive adhesion layer is a layer that exhibits the tackiness on the surface thereof on the electrode mixture layer side as described above, and exhibits electroconductivity in the thickness direction of the layer. Examples of such an electroconductive adhesion layer may include a layer containing electroconductive particles and a binder. Further, the electroconductive adhesion layer having a twolayer structure including the first adhesion layer and the second adhesion layer described above can be regarded as the electroconductive adhesion layer in the modification.

The modification may be the same as the details described about the electrode according to the embodiment except that the electroconductive adhesion layer having the tackiness is included.

[7. Non-aqueous secondary battery]

The non-aqueous secondary battery according to the present invention is a non-aqueous secondary battery including a positive electrode, a negative electrode, and an electrolytic solution. Here, at least one of the positive electrode and the negative electrode is the electrode for a non-aqueous secondary battery described above.

The non-aqueous secondary battery according to the present invention that includes the aforementioned electrode for a non-aqueous secondary battery can be a non-aqueous secondary battery having reduced electrode resistance. Furthermore, since the non-aqueous secondary battery can be produced by using the electrode excellent in high-speed moldability, the non-aqueous secondary battery can be produced with high productivity. Furthermore, the non-aqueous secondary that includes the electrode according to the present invention can be a secondary battery having satisfactory high-temperature storage stability.

When the non-aqueous secondary battery is a lithium ion secondary battery, an electrolytic solution in which an electrolyte is dissolved in a solvent can be used as the electrolytic solution.

Here, an organic solvent capable of dissolving the electrolyte can be used as the solvent. Specifically, the solvent used may be prepared by adding a viscosity adjusting solvent such as 2,5-dimethyltetrahydrofuran, tetrahydrofuran, diethyl carbonate, ethyl methyl carbonate, dimethyl carbonate, methyl acetate, dimethoxyethane, dioxolane, methyl propionate, methyl formate or the like to an alkyl carbonate-based solvent such as ethylene carbonate, propylene carbonate, $\gamma$-butyrolactone, or the like.

As the electrolyte, a lithium salt can be used. As the lithium salt, for example, those disclosed in Japanese Patent Application Laid-Open No. 2012-204303 A can be used. Among these lithium salts, $LiPF_6$, $LiClO_4$ and $CF_3SO_3Li$ are preferable as the electrolyte because they are easily soluble in organic solvents and exhibit a high degree of dissociation.

The non-aqueous secondary battery may further include a separator, as necessary. As the separator, for example, those disclosed in Japanese Patent Application Laid-Open No. 2012-204303 A may be used. Among these, a microporous membrane made of a polyolefin-based resin (polyethylene, polypropylene, polybutene, polyvinyl chloride) is preferable because the film thickness of the entire separator can be reduced, thereby increasing the ratio of the electrode active material in the lithium ion secondary battery and increasing the capacity per volume.

As a method for producing the non-aqueous secondary battery, for example, a positive electrode and a negative electrode are overlapped with each other via a separator, and wound or folded as required in accordance with the shape of the battery. Then, they are placed in a battery container, and an electrolytic solution is injected into the battery container. The battery container is then sealed, thereby producing the non-aqueous secondary battery. In order to prevent the occurrence of a pressure rise or an overcharge/discharge in the secondary battery, an overcurrent preventing element such as a fuse, a PTC element, or the like, an expanded metal, a lead plate, or the like may be provided, as necessary. The shape of the secondary battery may be any of a coin type, a button type, a sheet type, a cylindrical type, a square type, a flat type, and the like.

[Example]

Hereinafter, the present invention will be specifically described by illustrating Examples. However, the present invention is not limited to the Examples described below. The present invention may be optionally modified for implementation without departing from the scope of claims of the present invention and its equivalents.

In the following description, "%" representing quantity is on the basis of weight, unless otherwise specified. Furthermore, in the following description, "part" representing quantity is on the basis of weight, unless otherwise specified. The operation described below was performed under the conditions of normal temperature and normal pressure, unless otherwise specified.

[Evaluation Method]

<Tacking Strength (Tackiness)>

In Examples and Comparative Examples, the tackiness of the surface of an adhesion layer disposed on a current collector layer was measured. Specifically, in Examples, the tackiness of the surface of a first adhesion layer disposed on the current collector layer, and the tackiness of the surface of a second adhesion layer in an electroconductive adhesion layer having the second adhesion layer in which the first adhesion layer is disposed on the current collector layer and the second adhesion layer is disposed on the first adhesion layer were measured. The tackiness of the surface of the second adhesion layer in Examples may be evaluated as the tackiness of the surface of the electroconductive adhesion layer having a two-layer structure. Meanwhile, in Comparative Examples, the tackiness of the surface of the first adhesion layer or the second adhesion layer disposed on the current collector layer was measured. The tackiness was measured with "TAC-1000" manufactured by RHESCA Co., Ltd. Specifically, a probe (made of SUS) with a diameter of 5 mm is pressed onto the electroconductive adhesion layer at a speed of 1 mm/second under a load of 4,000 gf, and held for 10 seconds. Then, a maximum load was measured at the time of pulling the probe at a speed of 1 mm/second. A higher value exhibits more excellent tacking strength.

<High-speed moldability>

In Examples and Comparative Examples, composite particles (granulated particles) were supplied onto the electroconductive adhesion layer disposed on the current collector layer, and an electrode was produced while the conveyance speed was increased in a roll press machine to be described later. The obtained electrode was subjected to visual inspection, and the maximum molding speed with which no streaks or chipping occurred was graded according to the following criteria.

    A: 50 m/min or more
    B: 30 m/min or more and less than 50 m/min
    C: 10 m/min or more and less than 30 m/min
    D: less than 10 m/min

<I-V Characteristics>

After injection of an electrolytic solution, a lithium ion secondary battery in each of Examples and Comparative Examples was allowed to stand at a temperature of 25°C for 5 hours. Next, the lithium ion secondary battery was charged to a cell voltage of 3.65 V using a constant current method at a temperature of 25°C and at a 0.2 C rate, and then subjected to an aging treatment at a temperature of 60°C for 12 hours. Then, the lithium ion secondary battery was discharged to a cell voltage of 3.00 V using a constant current method at a temperature of 25°C and at a 0.2 C rate. After that, the lithium ion secondary battery was charged with CC-CV (upper limit cell voltage: 4.35 V) using the constant current method at a 0.2 C rate, and then was discharged with CC to 3.00 V using the constant current method at a 0.2 C rate. Charging and discharging at a 0.2C rate were repeated three times. After that, a charging operation was performed under an environment of 25°C so that SOC at a 0.2 C rate was 50%, the lithium ion secondary battery was allowed to stand under an environment of 25°C for 3 hours, and a voltage V0 was measured. After that, a discharging operation was performed at a discharge rate of 1 C, a voltage V1 was measured 10 seconds after initiation of discharge, and a low-temperature IV resistance (mΩ) was calculated by (V0-V1)/40 × 1,000, and evaluated according to the following criteria. A smaller value indicates a more excellent low-temperature IV resistance.

    A: 40 mΩ or less

    B: more than 40 mΩ and 42 mΩ or less

    C: more than 42 mΩ and 44 mΩ or less

    D: more than 44 mΩ and 46 mΩ or less

    E: more than 46 mΩ

<High-temperature storage characteristics>

The lithium ion secondary battery in each of Examples and Comparative Examples was charged to a cell voltage of 4.2 V and then discharged to 3.0 V using a constant current method under an atmosphere of 25°C at a 0.5 C rate, and the initial discharge capacity C0 was measured. Subsequently, the lithium ion secondary battery was charged to a cell voltage of 4.2 V using the constant current method under an atmosphere of 25°C at a 0.5 C rate. After that, the lithium ion secondary battery was stored under an atmosphere of 60°C (high-temperature storage) for 3 weeks. After the high-temperature storage, the lithium ion secondary battery was discharged to 3 V using the constant current method under an atmosphere of 25°C at a 0.5 C rate, and the residual capacity C1 after the high-temperature storage was measured.

The capacity retention ratio (%) was determined by (residual capacity C1 / initial discharge capacity C0) × 100 and evaluated according to the following criteria. A higher capacity retention ratio indicates more excellent high-temperature storage characteristics of a lithium ion secondary battery.

A: The capacity retention ratio is 90% or more.
B: The capacity retention ratio is 85% or more and less than 90%.
C: The capacity retention ratio is 80% or more and less than 85%.
D: The capacity retention ratio is 75% or more and less than 80%.
E: The capacity retention ratio is less than 75%.

<Thickness of first adhesion layer and second adhesion layer>

The thickness of the first adhesion layer and the second adhesion layer was determined by performing sectioning with a glass blade using a microtome and observing the cross section with a transmission electron microscope.

<Median diameter of particles of polymer>

The median diameter of particles of a polymer was measured by a laser diffraction method. Specifically, an aqueous dispersion solution containing a prepared particulate polymer (solid content concentration: 0.1% by mass) was used as a sample, and the particle diameter at which the cumulative volume calculated from the small-diameter side became 50% in a particle size distribution (on a volume basis) obtained with a laser diffraction type particle diameter distribution measurement device (product name "LS-13 320" manufactured by Beckmann Coulter, Inc.) was obtained.

[Production Example 1: Method for producing binder I for electrode mixture layer (hydrogenated product of SIS)]

270 parts of dehydrated cyclohexane and 0.53 part of ethylene glycol dibutyl ether were placed into a reaction vessel that was equipped with a stirrer and in which air was sufficiently replaced with nitrogen, and 0.47 part of n-butyllithium (15% cyclohexane solution) was further added thereto. While the entire content was stirred at 60°C, 12.5 parts of dehydrated styrene was continuously added to the reaction vessel over 40 minutes. After the completion of addition, the entire content was stirred at 60°C for 20 minutes as it was. The reaction liquid was subjected to measurement by gas chromatography, and the polymerization conversion ratio at this point was 99.5%. Next, 75.0 parts of dehydrated isoprene was continuously added to the reaction liquid over 100 minutes. After the completion of addition, the mixture was continued to be stirred for 20 minutes as it was. The polymerization conversion ratio at this point was 99.5%. After that, 12.5 parts of dehydrated styrene was continuously added over 60 minutes, and after the completion of addition, the entire content was stirred for 30 minutes as it was. The polymerization conversion ratio at this point was about 100%. Here, 0.5 part of isopropyl alcohol was added to the reaction liquid to stop the reaction. Thus, a block copolymer [C1] was obtained. The ratio of a monomer unit derived from 1,2- and 3,4-addition polymerization in all monomer units derived from isoprene of the obtained block copolymer [C1] was 58%. Next, the aforementioned polymer solution was transferred to a pressure-resistant reaction vessel equipped with a stirrer, 7.0 parts of a diatomaceous earth-supported nickel catalyst (product name "E22U" manufactured by JGC Catalysts and Chemicals Ltd., nickel supported amount: 60%) as a hydrogenation catalyst and 80 parts of dehydrated cyclohexane were added thereto and mixed. The inside air of the reaction vessel was replaced with a hydrogen gas, and hydrogen was supplied while the solution was stirred. Thus, a hydrogenation reaction was performed at a temperature of 190°C and a pressure of 4.5 MPa for 6 hours. After the completion of the hydrogenation reaction, the reaction solution was filtered to remove the hydrogenation catalyst, and to the filtrate, 1.0 part of a xylene solution in which 0.1 part of pentaerythrityl tetrakis[3-(3,5-di-t-butyl-4-hydroxyphenyl)propionate] (product name "Songnox1010" manufactured by KOYO Chemical Research Center) as a phenol-based antioxidant was dissolved was added and dissolved. Further, cyclohexane was added to obtain a cyclohexane solution of the polymer I at a predetermined concentration.

[Production Example 2: Method for producing binder II for electrode mixture layer (SBR1)]

Into a 5 MPa pressure-resistant container equipped with a stirrer, 64 parts of styrene, 32 parts of 1,3-butadiene, 3 parts of itaconic acid, 1 part of 2-hydroxyethyl acrylate (β-hydroxyethyl acrylate), 0.3 part of t-dodecylmercaptan as a molecular weight modifier, 5 parts of sodium dodecyl benzenesulfonate as an emulsifier, 150 parts of ion-exchanged water as a solvent, and 1 part of potassium persulfate as a polymerization initiator were charged, sufficiently stirred, and then heated at 55°C to initiate polymerization. When the consumption amount of the monomer reached 95.0%, the mixture was cooled to stop the reaction. To the thus obtained aqueous dispersion containing the polymer, a 5% aqueous sodium hydroxide solution was added to adjust the pH to 8. After that, unreacted monomers were removed by distillation under heating and reduced pressure. After that, the product was cooled to a temperature of 30°C or lower to obtain an aqueous dispersion liquid containing a particulate polymer II (glass transition temperature Tg: 15°C).

[Production Example 3: Method for producing binder for first adhesion layer (ACR1)]

90 parts of ion-exchanged water and 0.23 part of ammonium persulfate were each supplied to a reaction vessel equipped with a stirrer, a gas phase was replaced with a nitrogen gas, and the temperature was increased to 70°C. On the other hand, 50 parts of ion-exchanged water, 1.0 part of sodium dodecyl benzenesulfonate ("NEOPELEX G-15" manufactured by Kao Corporation) as an emulsifier, 31.1 parts of styrene, 63.0 parts of 2-ethylhexyl acrylate, 1.7 parts of allyl glycidyl ether, 0.2 part of allyl methacrylate, and 4.0 parts of acrylic acid were mixed in another container to obtain a monomer composition. This monomer composition was continuously added to the reaction vessel over 4 hours, thereby performing polymerization. During the addition, the reaction was performed at 80°C. After the completion of addition, the mixture was further stirred at 80°C for 3 hours to complete the reaction. After that, a 5% aqueous sodium hydroxide solution was added to adjust the pH to 8. As a result, an aqueous dispersion liquid containing a binder for a first adhesion layer (glass transition temperature Tg: -15°C) was obtained.

[Production Example 4: Method for producing binder I for second adhesion layer (ACR2)]

90 parts of ion-exchanged water and 0.23 part of ammonium persulfate were each supplied to a reaction vessel equipped with a stirrer, a gas phase was replaced with a nitrogen gas, and the temperature was increased to 70°C. On the other hand, 50 parts of ion-exchanged water, 1.0 part of sodium dodecyl benzenesulfonate ("NEOPELEX G-15" manufactured by Kao Corporation) as an emulsifier, 20.1 parts of styrene, 75 parts of 2-ethylhexyl acrylate, 1.7 parts of allyl glycidyl ether, 0.2 part of allyl methacrylate, and 3.0 parts of acrylic acid were mixed in another container to obtain a monomer composition. This monomer composition was continuously added to the reaction vessel over 4 hours, thereby performing polymerization. During the addition, the reaction was performed at 80°C. After the completion of addition, the mixture was further stirred at 80°C for 3 hours to complete the reaction. After that, a 5% aqueous sodium hydroxide solution was added to adjust the pH to 8. As a result, an aqueous dispersion liquid containing a binder I for a second adhesion layer (glass transition temperature Tg: -40°C) was obtained.

[Production Example 5: Method for producing binder II for second adhesive layer (SBR2)]

Into a 5 MPa pressure-resistant container equipped with a stirrer, 38 parts of styrene, 58 parts of 1,3-butadiene, 3 parts of itaconic acid, 1 part of 2-hydroxyethyl acrylate (β-hydroxyethyl acrylate), 0.3 part of t-dodecylmercaptan as a molecular weight modifier, 5 parts of sodium dodecyl benzenesulfonate as an emulsifier, 150 parts of ion-exchanged water as a solvent, and 1 part of potassium persulfate as a polymerization initiator were placed, sufficiently stirred, and then heated to 55°C to initiate polymerization. When the consumption amount of the monomer reached 95.0%, the mixture was cooled to stop the reaction. To the thus obtained aqueous dispersion containing the polymer, a 5% aqueous sodium hydroxide solution was added to adjust the pH to 8. After that, unreacted monomers were removed by distillation under heating and reduced pressure. After that, the product was cooled to a temperature of 30°C or lower to obtain an aqueous dispersion liquid containing a binder II for a second adhesion layer (glass transition temperature Tg: - 30°C) .

[Example 1]

(1-1. Production of first adhesion layer)

5.0 parts of carboxymethyl cellulose ("1220" manufactured by Daicel Miraizu Ltd.) and 2.5 parts of a sodium salt of naphthalenesulfonic acid-formalin condensed product ("DEMOL N" manufactured by Kao Corporation) were added to 300 parts of ion-exchanged water, and the mixture was stirred with a dispersion stirrer at 1,500 rpm for 15 minutes. After that, 52.5 parts of graphite ("JB-5" manufactured by Nippon Graphite Industries, Co., Ltd.) and 13.0 parts of carbon black ("Li400" manufactured by Denka Company Limited) were added and stirred with a dispersion stirrer at 2,000 rpm for 30 minutes. Further, 27 parts of the binder I for a first adhesion layer in terms of solid content was added, and stirred at 1,500 rpm for 15 minutes to obtain a coating liquid for a first adhesion layer.
The obtained coating liquid for a first adhesion layer was applied onto an aluminum current collector having a thickness of 15 μm and a width of 30 cm through a kiss reverse gravure process at an application speed of 10 m/min and a drying temperature of 120°C. The film thickness of the obtained first adhesion layer was 1.0 μm, the application width in the width direction was 25 cm, and the tacking strength was 0.02 N.

(1-2. Production of second adhesion layer)

The aforementioned binder I for a second adhesion layer and DISPANOL TOC (manufactured by NOF Corporation) that was a nonionic surfactant as a surfactant were mixed so that the concentration of the binder in terms of solid content was 30% and the concentration of the surfactant was 0.5%. As a result, a coating liquid for a second adhesion layer was obtained.

The obtained coating liquid for a second adhesion layer was applied onto the current collector layer having the first adhesion layer through a direct gravure process at an application speed of 40 m/min and a drying temperature of 50°C. At this time, the coating liquid for a second adhesion layer was applied at the center of the first adhesion layer so that the second adhesion layer was disposed in a stripe pattern. Further, the coating liquid for a second adhesion layer was applied onto the first adhesion layer and the current collector layer at the edges of the first adhesion layer in the width direction so that the edge of the first adhesion layer were covered with a band-shaped second adhesion layer. The film thickness of the obtained second adhesion layer was 0.3 $\mu$m, the application width in the width direction was 25.5 cm, and the tacking strength was 1.8 N. The ratio (%) of the width S2 of a region where the coating liquid for a second adhesion layer was applied relative to the width S1 of a region where the coating liquid for a first adhesion layer was applied was set to 102%. Further, the ratio of the area of the first adhesion layer covered with the second adhesion layer relative to the total area of the first adhesion layer was set to 40%.

(1-3. Production of composite particles for positive electrode)

A composite particle-producing device including a cylindrical container having an internal diameter of 180 mm and an internal capacity of 2 L as a granulation tank and stirrer blades on two axes in a vertical direction, which is the axial direction of the cylindrical container, and a horizontal direction (a primary stirrer blade is in the vertical direction and a secondary stirrer blade is in the horizontal direction) in the cylindrical container was prepared. The primary stirrer blade has an inclined paddle including three main blades having a diameter of 170 mm, the secondary stirrer blade has a V-shaped anchor blade having a diameter of 30 mm, and the device has a mechanism for sealing the device by allowing air to pass in order to prevent raw materials from entering respective drive units of the primary stirrer blade and the secondary stirrer blade. A pre-stirring operation (i), an operation of pre-forming composite particles (ii), and a particle sizing operation (iii) were performed in this order using the aforementioned composite particle-producing device to produce composite particles.

In the pre-stirring operation (i), 96 parts (1,344 g) of a Co-Ni-Mn lithium composite oxide-based active material NMC532 ($LiNi_{0.5}Co_{0.2}Mn_{0.3}O_2$) (average particle diameter: 6 $\mu$m) as a positive electrode active material for a lithium ion battery and 2 parts (28 g) of carbon black (BET specific surface area: 62 $m^2$/g, bulk density: 0.16 $g/cm^3$) as an electroconductive material were placed into the granulation tank. Next, air at room temperature for sealing the respective drive units of the primary stirrer blade and the secondary stirrer blade (hereinafter referred to as "air for sealing") was allowed to pass at 20 L/min (aeration amount: 10/min), and the mixture was stirred for 15 minutes under operation conditions of a peripheral speed of the primary stirrer blade of 5 m/s and a peripheral speed of the secondary stirring unit of 6 m/s. The solid content concentration of the powder material after stirring was measured to be 99% or more.

Next, in the operation of pre-forming composite particles (ii), the air for sealing at room temperature was allowed to pass at 20 L/min (aeration amount: 10/min), and 2 parts (280 g) in terms of solid content of the cyclohexane solution of the polymer I (solid content concentration: 10% by mass, viscosity index: 200 mPa·s) as the binder I for an electrode mixture layer was continuously added over 15 minutes from a dropping funnel under operation conditions of a peripheral speed of the primary stirrer blade of 5 m/s and a peripheral speed of the secondary stirrer blade of 6 m/s.

Next, in the particle sizing operation (iii), the air for sealing at room temperature was allowed to pass at 20 L/min (aeration amount: 10/min), and the device was operated for 10 minutes under operation conditions of a peripheral speed of the primary stirrer blade of 2 m/s and a peripheral speed of the secondary stirrer blade of 2 m/s.

The operations (i) to (iii) described above were performed in this order to obtain composite particles for a positive electrode.

(1-4. Production of positive electrode)

The composite particles for a positive electrode obtained in (1-3) were supplied to rolls for pressing (roll temperature: 50°C, pressing linear pressure: 1,000 kN/m) of a roll press machine ("pressing and cutting rough surface heat roll" manufactured by Hirano Gikenkogyo Co., Ltd.) using a fixed quantity feeder ("Nikka spray K-V" manufactured by Nikka Ltd.). The aluminum foil having the first adhesion layer and the second adhesion layer was placed between the rolls for pressing, so that the aforementioned composite particles supplied from the fixed quantity feeder were attached to the aluminum foil. Press molding was performed at a molding speed of 5.0 m/min to obtain a positive electrode raw material having a positive electrode active material layer having a weight basis of 20 $mg/cm^2$. After that, the prepared positive electrode raw material was roll pressed under an environment at a temperature of 25±3°C from a side of the positive electrode mixture layer to obtain a positive electrode having a positive electrode mixture layer density of 3.50 g/cm$^3$.

(1-5. Production of negative electrode)

97.4 parts of natural graphite (volume-based median diameter: 22 $\mu$m, theoretical capacity: 360 mAh/g) as a negative electrode active material and 1.0 part (in terms of solid content) of an ammonium salt of carboxymethyl cellulose (product number "DN-800H" manufactured by Daicel FineChem Ltd.) were placed into a planetary mixer. Further, the mixture was diluted with ion-exchanged water so that the solid content concentration of the content of the mixer was 60%, and then kneaded at a rotation speed of 45 rpm for 60 minutes. After that, 1.5 parts of the particulate polymer II as the binder II for an electrode mixture layer in terms of solid content was added, and the content of the mixer was kneaded at a rotation speed of 40 rpm for 40 minutes. Subsequently, ion-exchanged water was added so that the viscosity (with a B-type viscometer, temperature: 25°C, rotor rotation number: 60 rpm) was 3,000±200 mPa·s to prepare a slurry composition for a negative electrode.

The obtained slurry composition for a negative electrode was applied onto a copper foil having a thickness of 10 $\mu$m as a current collector with a comma coater so that the application amount was 10.5±0.5 mg/cm$^2$. The copper foil was conveyed at a speed of 0.2 m/min in an oven at a temperature of 120°C over 2 minutes and in the oven at a temperature of 130°C over 2 minutes to dry the slurry composition on the copper foil. Thus, a negative electrode raw material having a negative electrode mixture layer on the current collector was obtained.

After that, the prepared negative electrode raw material was roll pressed under an environment at a temperature of 25±3°C from a side of the negative electrode mixture layer to obtain a negative electrode having a negative electrode mixture layer density of 1.60 g/cm$^3$.

(1-6. Preparation of separator)

A polypropylene separator of a single layer (product name "Celgard 2500" manufactured by Celgard, LLC.) was prepared as a separator including a separator substrate.

(1-7. Production of lithium ion secondary battery)

A layered laminate cell (corresponding to an initial design discharge capacity of 40 mAh) was produced using the positive electrode obtained in (1-4), the negative electrode obtained in (1-5), and the separator prepared in (1-6), disposed in an aluminum package, and then dried under vacuum at 60°C for 10 hours. After that, the aluminum package was filled with a 1.0 M LiPF$_6$ solution (containing as a solvent a mixed solvent of ethylene carbonate (EC) and diethyl carbonate (DEC) at a volume ratio of 3/7 and as an additive 2% by volume (relative to the solvent) of vinylene carbonate) as an electrolytic solution. Furthermore, the aluminum package was closed by heat sealing at a temperature of 150°C so as to seal an opening of the aluminum package. Thus, a lithium ion secondary battery was produced. Using this lithium ion secondary battery, the I-V characteristics and high-temperature storage characteristics were evaluated in accordance with the methods described above.

[Example 2]

A lithium ion secondary battery was produced and evaluated by the same manner as that in Example 1 except that the thickness of the first adhesion layer of the positive electrode was changed to 2 $\mu$m.

[Example 3]

A lithium ion secondary battery was produced and evaluated by the same manner as that in Example 1 except that the thickness of the first adhesion layer of the positive electrode was changed to 0.25 $\mu$m.

[Example 4]

A lithium ion secondary battery was produced and evaluated by the same manner as that in Example 1 except that the thickness of the second adhesion layer of the positive electrode was changed to 1 $\mu$m.

[Example 5]

A lithium ion secondary battery was produced and evaluated by the same manner as that in Example 1 except that the thickness of the second adhesion layer was changed to 0.1 μm.

[Example 6]

A lithium ion secondary battery was produced and evaluated by the same manner as that in Example 1 except that the thickness of the second adhesion layer was changed to 3 μm.

[Example 7]

An aqueous dispersion liquid containing a binder for a second adhesion layer (glass transition temperature Tg: -40°C) having a volume-based median diameter of 0.3 μm was obtained by the same method as that in Production Example 4 except that the amount of sodium dodecylbenzene sulfonate as the emulsifier was changed to 0.5 part. A lithium ion secondary battery was produced and evaluated by the same manner as that in Example 1 except that the resulting aqueous dispersion of the binder for a second adhesion layer was used instead of the binder I for a second adhesion layer obtained in Production Example 4.

[Example 8]

An aqueous dispersion liquid containing a binder for a second adhesion layer (glass transition temperature Tg: -40°C) having a volume-based median diameter of 0.08 μm was obtained by the same method as in Production Example 4 except that the amount of sodium dodecylbenzene sulfonate as the emulsifier was changed to 1.5 parts. A lithium ion secondary battery was produced and evaluated by the same manner as that in Example 1 except that the resulting aqueous dispersion of the binder for a second adhesion layer was used instead of the binder I for a second adhesion layer obtained in Production Example 4.

[Example 9]

A lithium ion secondary battery was produced and evaluated by the same manner as that in Example 1 except that the ratio (%) of the width S2 of the region where the coating liquid for a second adhesion layer was applied relative to the width S1 of the region where the coating liquid for a first adhesion layer was applied was changed to 105%. In Example 9, the ratio of the area of the first adhesion layer covered with the second adhesion layer to the total area of the first adhesion layer was 40%.

[Example 10]

A lithium ion secondary battery was produced and evaluated by the same manner as that in Example 1 except that the ratio (%) of the width S2 of the region where the coating liquid for a second adhesion layer was applied relative to the width S1 of the region where the coating liquid for a first adhesion layer was applied was changed to 100%. In Example 10, the ratio of the area of the first adhesion layer covered with the second adhesion layer to the total area of the first adhesion layer was 40%.

[Example 11]

A lithium ion secondary battery was produced by the same manner as that in Example 1 except that the positive electrode and the negative electrode were changed as follows. Using this lithium ion secondary battery, the I-V characteristics and high-temperature storage characteristics were evaluated in accordance with the methods described above.

(2-1. First Adhesion Layer)

5.0 parts of carboxymethyl cellulose ("1220" manufactured by Daicel Miraizu Ltd.) and 2.5 parts of a sodium salt of naphthalenesulfonic acid-formalin condensed product ("DEMOL N" manufactured by Kao Corporation) were added to 300 parts of ion-exchanged water, and the mixture was stirred with a dispersion stirrer at 1,500 rpm for 15 minutes. After that, 52.5 parts of graphite ("JB-5" manufactured by Nippon Graphite Industries, Co., Ltd.) and 13.0 parts of carbon black ("Li400" manufactured by Denka Company Limited) were added and stirred with a dispersion stirrer at 2,000 rpm for 30 minutes. Further, 27 parts of the binder II for an electroconductive adhesive in terms of solid content was added, and stirred at 1,500 rpm for 15 minutes to obtain a coating liquid for a first adhesion layer.
The obtained coating liquid for a first adhesion layer was applied onto a copper current collector having a

thickness of 10 μm and a width of 30 cm through a kiss reverse gravure process at an application speed of 10 m/min and a drying temperature of 120°C. The film thickness of the obtained first adhesion layer was 0.5 μm, the application width in the width direction was 25 cm, and the tacking strength was 0.02 N.

(2-2. Second adhesion layer)

The aforementioned binder II for a second adhesion layer and DISPANOL TOC (manufactured by NOF Corporation) that was a nonionic surfactant as a surfactant were mixed so that the concentration of the binder in terms of solid content was 30% and the concentration of the surfactant was 0.5%. As a result, a coating liquid for a second adhesion layer was obtained.
The obtained coating liquid for a second adhesion layer was applied onto the current collector having the first adhesion layer through a direct gravure process at an application speed of 40 m/min and a drying temperature of 50°C. The film thickness of the obtained second adhesion layer was 0.3 μm, the application width in the width direction was 25.5 cm, and the tacking strength was 1.7 N.

(2-3. Positive electrode)

97 parts of a Co-Ni-Mn lithium composite oxide-based active material NMC532 ($LiNi_{0.3}Co_{0.2}Mn_{0.3}O_2$) as a positive electrode active material, 1 part of acetylene black (product name "Li-400" manufactured by Denki Kagaku Kogyo Kabushiki Kaisha) as an electroconductive material, and 2 parts (in terms of solid content) of polyvinylidene fluoride (product name "#7208" manufactured by Kureha Corporation) as a binder were added and mixed in a planetary mixer. Further, N-methyl-2-pyrrolidone (NMP) was gradually added as an organic solvent, and the mixture was stirred and mixed at a temperature of $25\pm3°C$ and a rotation number of 25 rpm to obtain a slurry composition for a positive electrode having a viscosity (with a B-type viscometer, temperature: $25\pm3°C$, rotor: M4, rotor rotation number: 60 rpm) of 3,600 mPa·s.
The obtained slurry composition for a positive electrode was applied onto an aluminum foil having a thickness of 15 μm as a current collector with a comma coater so that the application amount was $20.0\pm0.5$ mg/cm$^2$. Further, the aluminum foil was conveyed at a speed of 0.2 m/minute in an oven at a temperature of 120°C over 2 minutes and in the oven at a temperature of 130°C over 2 minutes to dry the slurry composition on the aluminum foil. Thus, a positive electrode raw material having a positive electrode mixture layer on the current collector was obtained.
After that, the prepared positive electrode raw material was roll pressed under an environment at a temperature of $25\pm3°C$ from the side of the positive electrode mixture layer to obtain a positive electrode having a positive electrode mixture layer density of 3.50 g/cm$^3$.

(2-4. Composite particles for negative electrode)

97.4 parts of natural graphite (volume-based median diameter: 22 μm, theoretical capacity: 360 mAh/g) as a negative electrode active material and 1.0 part (in terms of solid content) of an ammonium salt of carboxymethyl cellulose (product number "DN-800H" manufactured by Daicel FineChem Ltd.) were placed into a planetary mixer. Further, the mixture was diluted with ion-exchanged water so that the solid content concentration of the content of the mixer was 60%, and then kneaded at a rotation speed of 45 rpm for 60 minutes. After that, 1.5 parts of the particulate polymer II as the binder II for an electrode mixture layer in terms of solid content was added, and the content of the mixer was kneaded at a rotation speed of 40 rpm for 40 minutes. Subsequently, ion-exchanged water was added so that the viscosity (with a B-type viscometer, temperature: 25°C, rotor rotation number: 60 rpm) was $1,000\pm200$ mPa·s to prepare a slurry composition for a negative electrode.
The obtained slurry composition for a negative electrode was supplied to a spray drier (product name "L-8i" manufactured by Ohkawara Kakohki Co., Ltd.), and spraydried with a rotary disc-type sharp edge atomizer (manufactured by Ohkawara Kakohki Co., Ltd., diameter: 65 mm) under conditions of a rotation number of 25,000 rpm, a hot air temperature of 180°C, and a temperature of a particle collecting outlet of 90°C to obtain composite particles for a negative electrode having a volume-based median diameter of 70 μm.

(2-5. Negative electrode)

The composite particles for a negative electrode obtained in the foregoing were supplied to rolls for pressing (roll temperature: 50°C, press linear pressure: 500 kN/m) of a roll press machine ("pressing and cutting rough surface heat roll" manufactured by HIRANO GIKEN KOGYO Co., Ltd.) using a fixed quantity feeder ("Nikka spray K-V" manufactured by Nikka Ltd.). The copper foil having the first adhesion layer and the second adhesion layer was placed between the rolls for pressing, so that the aforementioned composite particles supplied from the fixed quantity feeder were attached onto the copper foil. Press molding was performed at a molding speed of 5.0 m/min. Thus, a negative electrode having the copper foil as a current collector and a negative electrode mixture layer formed on one surface of the copper foil was obtained. The weight per unit area of the negative electrode mixture layer was 10.5 mg/cm$^2$, and the density thereof was 1.60 g/cm$^3$.

[Example 12]

A lithium ion secondary battery was produced and evaluated by the same manner as that in Example 11 except that the thickness of the first adhesion layer of the negative electrode was changed to 0.3 μm and the thickness of the second adhesion layer was changed to 3 μm.

[Example 13]

A lithium ion secondary battery was produced and evaluated by the same manner as that in Example 11 except that the thickness of the first adhesion layer of the negative electrode was changed to 5 μm.

[Example 14]

An aqueous dispersion liquid containing a binder for a second adhesion layer (glass transition temperature Tg: -40°C) having a volume-based median diameter of 0.85 μm was obtained by the same manner as that in Production Example 4 except that the amount of sodium dodecylbenzene sulfonate as the emulsifier was changed to 0.15 part. A lithium ion secondary battery was produced and evaluated by the same manner as that in Example 1 except that the resulting aqueous dispersion of the binder for a second adhesion layer was used instead of the binder I for a second adhesion layer obtained in Production Example 4, and the thickness of the second adhesion layer was changed to 0.9 μm.

[Example 15]

A lithium ion secondary battery was produced and evaluated by the same manner as that in Example 1 except that the ratio of the area of the first adhesion layer covered with the second adhesion layer to the total area of the first adhesion layer was changed to 60%.

[Example 16]

A lithium ion secondary battery was produced and evaluated by the same manner as that in Example 1 except that the ratio of the area of the first adhesion layer covered with the second adhesion layer to the total area of the first adhesion layer was changed to 25%.

[Comparative Example 1]

A lithium ion secondary battery was produced and evaluated by the same manner as that in Example 1 except that the thickness of the first adhesion layer of the positive electrode was changed to 2.5 μm and the second adhesion layer was not provided.

[Comparative Example 2]

A lithium ion secondary battery was produced and evaluated by the same manner as that in Example 1 except that the first adhesion layer of the positive electrode was not provided, that is, the second adhesion layer was provided directly on the current collector layer.

<Results>

The results in Examples and Comparative Examples described above are shown in the following Table 1. In the table, abbreviations mean as follows.

NMC532: LiNi$_{0.5}$Co$_{0.2}$Mn$_{0.3}$O$_2$
Hydrogenated product of SIS: a hydrogenated product of styrene-isoprene-styrene copolymer used as the polymer I
CMC: an ammonium salt of carboxymethyl cellulose
ACR1: an acrylate-based polymer used as the binder I for a first adhesion layer
ACR2: an acrylate-based polymer used as the binder I for a second adhesion layer
SBR1: a styrene-butadiene copolymer used as the particulate polymer II

SBR2: a styrene-butadiene copolymer used as the binder for a second adhesion layer

Particle diameter D50: the median diameter of the composite particles or the polymer

Tg1 (°C): the glass transition temperature of the binder contained in the first adhesion layer

Tg2 (°C): the glass transition temperature of the binder contained in the second adhesion layer

Coverage ratio (%): the ratio of the area of the first adhesion layer covered with the second adhesion layer relative to the total area of the first adhesion layer

Ratio of Tackiness (second electroconductive layer/first electroconductive layer): the ratio of the tackiness value of the second electroconductive layer relative to the tackiness value of the first electroconductive layer

[Table 1]

| Table 1. Types of Composite Particles | | | | |
|---|---|---|---|---|
| | | Examples 1 to 10 and 14 to 16 and Comparative examples 1 and 2 | | Examples 11 to 13 |
| Electrode active material | Types | NMC532 | | Natural graphite |
| | Blending amount (part) | 96 | | 97.5 |
| Binding material | Types | Hydrogenated product of SIS | | SBR1 |
| | Blending amount (part) | 2 | | 1.5 |
| Optional component | Types | Carbon black (electroconductive material) | | CMC |
| | Blending amount (part) | 2 | | 1 |
| Particle diameter D50 ($\mu$m) | | 60 | | 70 |

[Table 2]

| Table 2. Composition and evaluation results of positive electrodes in Examples 1 to 6 | | | | | | | |
|---|---|---|---|---|---|---|---|
| | | Example 1 | Example 2 | Example 3 | Example 4 | Example 5 | Example 6 |
| Current collector layer | | Al foil | Al foil | Al foil | Al foil | Al foil | Al foil |
| First adhesion layer | | | | | | | |
| Binder | Types | ACR1 | ACR1 | ACR1 | ACR1 | ACR1 | ACR1 |
| | Tg1(°C) | -15 | -15 | -15 | -15 | -15 | -15 |
| | Blending amount (part) | 27 | 27 | 27 | 27 | 27 | 27 |
| Electroconductive particles | Types | Carbon black | Carbon black | Carbon black | Carbon black | Carbon black | Carbon black |
| | Blending amount (part) | 13 | 13 | 13 | 13 | 13 | 13 |
| | Types | Graphite | Graphite | Graphite | Graphite | Graphite | Graphite |
| | Blending amount (part) | 52.5 | 52.5 | 52.5 | 52.5 | 52.5 | 52.5 |
| Thickness t1 ($\mu$m) | | 1 | 2 | 0.25 | 1 | 1 | 1 |
| Second adhesion layer | | | | | | | |
| | Types | ACR2 | ACR2 | ACR2 | ACR2 | ACR2 | ACR2 |

(continued)

| | | | | | | | |
|---|---|---|---|---|---|---|---|
| Second adhesion layer | | | | | | | |
| Binder | Particle diameter D50 (μm) | 0.15 | 0.15 | 0.15 | 0.15 | 0.15 | 0.15 |
| | Tg2(°C) | -40 | -40 | -40 | -40 | -40 | -40 |
| Thickness t2 (μm) | | 0.3 | 0.3 | 0.3 | 1 | 0.1 | 3 |
| Form of electroconductive adhesion layer | | | | | | | |
| Ratio of thicknesses (t2/t1) | | 0.3 | 0.2 | 1.2 | 1.0 | 0.1 | 3.0 |
| Ratio of widths (S2/S1) (%) | | 102 | 102 | 102 | 102 | 102 | 102 |
| Coverage ratio(%) | | 40 | 40 | 40 | 40 | 40 | 40 |
| Types of electrodes | | positive electrode | positive electrode | positive electrode | positive electrode | positive electrode | positive electrode |
| Evaluation | | | | | | | |
| Tackiness (N) of electroconductive adhesion layer | | 1.8 | 0.95 | 2.2 | 2 | 0.5 | 2.8 |
| IV resistance | | A | A | B | B | C | C |
| high-temperature storage stability | | A | B | A | A | A | A |
| Molding Speed | | A | B | A | A | C | A |

[Table 3]

Table 3. Composition and evaluation results of positive electrodes in Examples 7 to 10 and Comparative Examples 1 and 2

| | | Example 7 | Example 8 | Example 9 | Example 10 | Comparative Example 1 | Comparative Example 2 |
|---|---|---|---|---|---|---|---|
| Current collector layer | | Al foil | Al foil | Al foil | Al foil | Al foil | Al foil |
| First adhesion layer | | | | | | | |
| Binder | Types | ACR1 | ACR1 | ACR1 | ACR1 | ACR1 | - |
| | Tg1(°C) | -15 | -15 | -15 | -15 | -15 | - |
| | Blending amount (part) | 27 | 27 | 27 | 27 | 27 | - |
| Electroconductive particles | Types | Carbon black | Carbon black | Carbon black | Carbon black | Carbon black | |
| | Blending amount (part) | 13 | 13 | 13 | 13 | 13 | - |
| | Types | Graphite | Graphite | Graphite | Graphite | Graphite | - |
| | Blending amount (part) | 52.5 | 52.5 | 52.5 | 52.5 | 52.5 | - |
| Thickness t1 (μm) | | 1 | 1 | 1 | 1 | 2.5 | - |

(continued)

| Second adhesion layer | | | | | | | |
|---|---|---|---|---|---|---|---|
| Binder | Types | ACR2 | ACR2 | ACR2 | ACR2 | - | ACR2 |
| | Particle diameter D50 ($\mu$m) | 0.3 | 0.08 | 0.15 | 0.15 | - | 0.15 |
| | Tg2(°C) | -40 | -40 | -40 | -40 | - | -40 |
| Thickness t2 ($\mu$m) | | 0.3 | 0.3 | 0.3 | 0.3 | - | 0.3 |
| Form of electroconductive adhesion layer | | | | | | | |
| Ratio of thicknesses (t2/t1) | | 0.3 | 0.3 | 0.3 | 0.3 | - | - |
| Ratio of widths (S2/S1) (%) | | 102 | 102 | 105 | 100 | - | - |
| Coverage ratio(%) | | 40 | 40 | 40 | 40 | | |
| Types of electrodes | | positive electrode | positive electrode | positive electrode | positive electrode | positive electrode | positive electrode |
| Evaluation | | | | | | | |
| Tackiness (N) of electroconductive adhesion layer | | 1.9 | 0.7 | 1.8 | 1.8 | 0.02 | 0.9 |
| IV resistance | | B | B | A | A | B | D |
| high-temperature storage stability | | B | A | C | C | D | D |
| Molding Speed | | A | C | C | C | D | B |

[Table 4]

| Table 4. Composition and evaluation results of negative electrodes in Examples 11 to 13 | | | | | |
|---|---|---|---|---|---|
| | | | Example 11 | Example 12 | Example 13 |
| Current collector layer | | | Cu foil | Cu foil | Cu foil |
| First adhesion layer | | | | | |
| Binder | | Types | ACR1 | ACR1 | ACR1 |
| | | Tg1(°C) | -15 | -15 | -15 |
| | | Blending amount (part) | 27 | 27 | 27 |
| Electro- conductive particles | | Types | Carbon black | Carbon black | Carbon black |
| | | Blending amount (part) | 13 | 13 | 13 |
| | | Types | Graphite | Graphite | Graphite |
| | | Blending amount (part) | 52.5 | 52.5 | 52.5 |
| Thickness t1 ($\mu$m) | | | 0.5 | 0.3 | 5 |
| Second adhesion layer | | | | | |
| Binder | | Types | SBR2 | SBR2 | SBR2 |
| | | Particle diameter D50 ($\mu$m) | 0.15 | 0.15 | 0.15 |
| | | Tg2(°C) | -30 | -30 | -30 |
| Thickness t2 ($\mu$m) | | | 0.3 | 3 | 0.3 |
| Form of electroconductive adhesion layer | | | | | |
| Ratio of thicknesses (t2/t1) | | | 0.6 | 10.0 | 0.1 |

(continued)

| Form of electroconductive adhesion layer | | | |
|---|---|---|---|
| Ratio of widths (S2/S1) (%) | 102 | 102 | 102 |
| Coverage ratio(%) | 40 | 40 | 40 |
| Types of electrodes | negative electrode | negative electrode | negative electrode |
| Evaluation | | | |
| Tackiness (N) of electroconductive adhesion layer | 1.7 | 2.6 | 0.4 |
| IV resistance | A | C | B |
| high-temperature storage stability | A | A | B |
| Molding Speed | A | A | B |

[Table 5]

| Table 5. Composition and evaluation results of positive electrodes in Examples 14 to 16 | | | | |
|---|---|---|---|---|
| | | Example 14 | Example 15 | Example 16 |
| Current collector layer | | Al foil | Al foil | Al foil |
| First adhesion layer | | | | |
| Binder | Types | ACR1 | ACR1 | ACR1 |
| | Tg1(°C) | -15 | -15 | -15 |
| | Blending amount (part) | 27 | 27 | 27 |
| Electro-conductive particles | Types | Carbon black | Carbon black | Carbon black |
| | Blending amount (part) | 13 | 13 | 13 |
| | Types | Graphite | Graphite | Graphite |
| | Blending amount (part) | 52.5 | 52.5 | 52.5 |
| Thickness t1 ($\mu$m) | | 1 | 2 | 0.25 |
| Second adhesion layer | | | | |
| Binder | Types | ACR2 | ACR2 | ACR2 |
| | Particle diameter D50 ($\mu$m) | 0.85 | 0.15 | 0.15 |
| | Tg2(°C) | -40 | -40 | -40 |
| Thickness t2 ($\mu$m) | | 0.9 | 0.3 | 0.3 |
| Form of electro-conductive adhesion layer | | | | |
| Ratio of thicknesses (t2/t1) | | 0.3 | 0.2 | 1.2 |
| Ratio of widths (S2/S1) (%) | | 102 | 102 | 102 |
| Coverage ratio(%) | | 40 | 60 | 25 |
| Types of electrodes | | positive electrode | positive electrode | positive electrode |
| Evaluation | | | | |
| Tackiness (N) of electroconductive adhesion layer | | 1.8 | 0.95 | 2.2 |
| IV resistance | | C | B | A |
| high-temperature storage stability | | C | A | B |
| Molding Speed | | A | A | C |

[Table 6]

| Table 6. Evaluation of Tackiness of the First adhesion layers and the Second adhesion layers in Examples 1 to 16 | | | |
|---|---|---|---|
| | Tackiness of the first adhesion layer (N) | Tackiness of the second adhesion layer (N) | Ratio of tackiness (The second adhesion layer / the First adhesion layer) |
| Example 1 | 0.015 | 1.8 | 120 |
| Example 2 | 0.020 | 0.95 | 48 |
| Example 3 | 0.011 | 2.2 | 200 |
| Example 4 | 0.015 | 2 | 133 |
| Example 5 | 0.015 | 0.5 | 33 |
| Example 6 | 0.015 | 2.8 | 187 |
| Example 7 | 0.015 | 1.9 | 127 |
| Example 8 | 0.015 | 0.7 | 47 |
| Example 9 | 0.015 | 1.8 | 120 |
| Example 10 | 0.015 | 1.8 | 120 |
| Example 11 | 0.013 | 1.7 | 131 |
| Example 12 | 0.011 | 2.6 | 236 |
| Example 13 | 0.025 | 0.4 | 16 |
| Example 14 | 0.015 | 2.1 | 140 |
| Example 15 | 0.015 | 2.5 | 167 |
| Example 16 | 0.015 | 1.0 | 67 |

With respect to the electrode including the electroconductive adhesion layer having the first adhesion layer and the second adhesion layer, it was confirmed that an electrode attempted to achieve both a reduction in I-V resistance and high-speed moldability was obtained as shown in Examples 1 to 13 and 14 to 16. On the other hand, it was confirmed that when only the first adhesion layer was included as shown in Comparative Example 1, a reduction in I-V resistance was achieved, but sufficient high-speed moldability was not obtained. It was confirmed that when only the second adhesion layer was included as shown in Comparative Example 2, satisfactory high-speed moldability was achieved, but I-V resistance was high. In addition, it was confirmed that the lithium ion batteries using the electrodes shown in Examples 1 to 13 and 14 to 16 had improved high-temperature storage stability.

**Claims**

1.    An electrode for a non-aqueous secondary battery, comprising a current collector layer, an electroconductive adhesion layer, and an electrode mixture layer in this order, wherein:

the electrode mixture layer contains an electrode active material and a binder;
the electroconductive adhesion layer includes a first adhesion layer that is disposed on the current collector layer and a second adhesion layer that is disposed so as to partially cover the first adhesion layer and is in contact with the electrode mixture layer;
the first adhesion layer contains electroconductive particles and a binder; and
the second adhesion layer contains electroconductive particles and a binder and has a containing ratio of the electroconductive particles lower than that in the first adhesion layer or
the second adhesion layer contains a binder and no electroconductive particles.

2.    The electrode for a non-aqueous secondary battery according to claim 1, wherein the electrode mixture layer includes composite particles containing an electrode active material and a binder.

3.    The electrode for a non-aqueous secondary battery according to claim 1, wherein the second adhesion layer contains a binder and no electroconductive particles.

4. The electrode for a non-aqueous secondary battery according to claim 1, wherein the second adhesion layer is regularly disposed at an area that is part of a surface of the first adhesion layer.

5. The electrode for a non-aqueous secondary battery according to claim 1, wherein the second adhesion layer is partially disposed on a surface of the current collector layer on a side where the first adhesion layer is disposed.

6. The electrode for a non-aqueous secondary battery according to claim 1, wherein a ratio of an area of the first adhesion layer covered with the second adhesion layer relative to a total area of the first adhesion layer is 20% or more and 80% or less.

7. The electrode for a non-aqueous secondary battery according to claim 1, wherein a thickness t1 of the first adhesion layer is 0.1 $\mu$m or more and 3.0 $\mu$m or less.

8. The electrode for a non-aqueous secondary battery according to claim 1, wherein a thickness t2 of the second adhesion layer is 0.1 $\mu$m or more and 2.0 $\mu$m or less.

9. The electrode for a non-aqueous secondary battery according to claim 1, wherein a ratio (t2/t1) of a thickness t2 of the second adhesion layer relative to a thickness t1 of the first adhesion layer is 0.1 or more and 10 or less.

10. The electrode for a non-aqueous secondary battery according to claim 1, wherein the binder contained in the second adhesion layer is in a particulate shape, and a median diameter of the binder is 0.01 $\mu$m or more and 1 $\mu$m or less.

11. The electrode for a non-aqueous secondary battery according to claim 1, wherein a glass transition temperature Tg1 of the binder contained in the first adhesion layer is -30°C or higher and 25°C or lower, a glass transition temperature Tg2 of the binder contained in the second adhesion layer is -50°C or higher and -10°C or lower, and the Tg1 is greater than the Tg2.

12. The electrode for a non-aqueous secondary battery according to any one of claims 1 to 11, wherein a tackiness of a surface of the electroconductive adhesion layer is more than 0.1 N and 3.0 N or less.

13. A non-aqueous secondary battery comprising a positive electrode, a negative electrode, and an electrolytic solution, wherein
at least one of the positive electrode and the negative electrode is the electrode for a non-aqueous secondary battery according to claim 1 or 2.

14. A method for producing the electrode for a non-aqueous secondary battery according to claim 1, the method comprising:

a step (A) of disposing an electroconductive adhesion layer on the current collector layer by performing a step (A1) of disposing the first adhesion layer on the current collector layer, and a step (A2) of partially disposing the second adhesion layer on the first adhesion layer; and
a step (B) of disposing an electrode mixture layer on the second adhesion layer of the electroconductive adhesion layer by supplying composite particles containing the electrode active material and the binder thereonto and pressing the composite particles.

15. The method for producing the electrode for a non-aqueous secondary battery according to claim 14, wherein:

the current collector layer is long-length; and
a width S1 of a region where the first adhesion layer is provided on the current collector layer and a width S2 of a region where the second adhesion layer is provided satisfy a relationship expressed by the following formula (1):

$$100 \leq S2/S1 \times 100 \leq 110 \quad (1).$$

# FIG.1

# FIG.2

FIG.3

# EP 4 773 195 A1

## INTERNATIONAL SEARCH REPORT

| International application No. |
|---|
| **PCT/JP2024/030775** |

### A. CLASSIFICATION OF SUBJECT MATTER

*H01M 4/13*(2010.01)i; *H01M 4/139*(2010.01)i; *H01M 4/36*(2006.01)i; *H01M 4/62*(2006.01)i; *H01M 4/66*(2006.01)i; *H01M 10/052*(2010.01)n; *H01M 10/0566*(2010.01)n
FI:  H01M4/13: H01M4/36 A; H01M4/139; H01M4/62 Z; H01M4/66 A; H01M10/0566; H01M10/052

According to International Patent Classification (IPC) or to both national classification and IPC

### B. FIELDS SEARCHED

Minimum documentation searched (classification system followed by classification symbols)
  H01M4/13; H01M4/139; H01M4/36; H01M4/62; H01M4/66; H01M10/052; H01M10/0566

Documentation searched other than minimum documentation to the extent that such documents are included in the fields searched

  Published examined utility model applications of Japan 1922-1996
  Published unexamined utility model applications of Japan 1971-2024
  Registered utility model specifications of Japan 1996-2024
  Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2013-30410 A (FURUKAWA-SKY ALUMINUM CORP.) 07 February 2013 (2013-02-07) | 1-15 |
| A | US 2012/0321945 A1 (SAMSUNG SDI CO., LTD.) 20 December 2012 (2012-12-20) | 1-15 |
| A | JP 2014-199738 A (TOYOTA JIDOSHA KABUSHIKI KAISHA) 23 October 2014 (2014-10-23) | 1-15 |
| A | JP 2023-70698 A (TOYOTA JIDOSHA KABUSHIKI KAISHA) 22 May 2023 (2023-05-22) | 1-15 |
| A | WO 2014/045884 A1 (TOYOTA JIDOSHA KABUSHIKI KAISHA) 27 March 2014 (2014-03-27) | 1-15 |
| A | JP 2007-201397 A (POWER SYSTEM KK) 09 August 2007 (2007-08-09) | 1-15 |
| A | WO 2013/018887 A1 (ZEON CORPORATION) 07 February 2013 (2013-02-07) | 1-15 |

☐ Further documents are listed in the continuation of Box C.   ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **07 November 2024** | **19 November 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

## INTERNATIONAL SEARCH REPORT
### Information on patent family members

International application No.

**PCT/JP2024/030775**

| Patent document cited in search report | | | Publication date (day/month/year) | Patent family member(s) | | | Publication date (day/month/year) |
|---|---|---|---|---|---|---|---|
| JP | 2013-30410 | A | 07 February 2013 | (Family: none) | | | |
| US | 2012/0321945 | A1 | 20 December 2012 | KR | 10-1199177 | B1 | |
| JP | 2014-199738 | A | 23 October 2014 | (Family: none) | | | |
| JP | 2023-70698 | A | 22 May 2023 | US | 2023/0142712 | A1 | |
| | | | | CN | 116111035 | A | |
| WO | 2014/045884 | A1 | 27 March 2014 | US | 2014/0079872 | A1 | |
| | | | | KR | 10-2014-0037783 | A | |
| | | | | CN | 103825050 | A | |
| JP | 2007-201397 | A | 09 August 2007 | (Family: none) | | | |
| WO | 2013/018887 | A1 | 07 February 2013 | US | 2014/0154569 | A1 | |
| | | | | CN | 103718355 | A | |
| | | | | KR | 10-2014-0051893 | A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010108971 A
- JP 2014078497 A
- US 2014079872
- US 20150194680
- JP 2013012393 A
- US 20130004843
- WO 2015115177 A
- JP 2001176757 A
- WO 2019039560 A
- WO 2021172208 A
- JP 2012204303 A